(19) Europäisches Patentamt
European Patent Office
Office européen des brevets

(11) EP 0 442 847 B2

(12) NEUE EUROPÄISCHE PATENTSCHRIFT

(45) Veröffentlichungstag und Bekanntmachung des Hinweises auf die Entscheidung über den Einspruch:
**23.08.2000 Patentblatt 2000/34**

(45) Hinweis auf die Patenterteilung:
**06.09.1995 Patentblatt 1995/36**

(21) Anmeldenummer: **91810090.0**

(22) Anmeldetag: **07.02.1991**

(51) Int. Cl.[7]: **C09D 7/12**

# (54) Gegen Schädigung durch Licht, Wärme und Sauerstoff stabilisierte Ueberzugsmittel

Coating composition resistant to light, heat and acids

Revêtement résistant aux détériorations occasionées par la lumière, la chaleur et les acides

(84) Benannte Vertragsstaaten:
**DE FR GB IT**

(30) Priorität: **16.02.1990 CH 51290**
**11.04.1990 CH 124990**

(43) Veröffentlichungstag der Anmeldung:
**21.08.1991 Patentblatt 1991/34**

(73) Patentinhaber:
**Ciba Specialty Chemicals Holding Inc.**
**4057 Basel (CH)**

(72) Erfinder:
- **Valet, Andreas, Dr.**
  **W-7859 Eimeldingen (DE)**
- **Berner, Godwin, Dr.**
  **CH-4102 Binningen (CH)**

(56) Entgegenhaltungen:
**EP-A- 0 200 190**
**EP-A- 0 309 401**
**EP-A- 0 434 608**
**US-A- 3 244 708**
**US-A- 3 423 360**
**US-A- 4 619 956**
**US-A- 4 775 707**
**US-A- 4 826 978**

- **Z.W. Wichs:"Blocked Isocyanates", Progress in Organic Coatings, 3 (1975), pages 73-99**
- **Ullmann's Enc.of Ind. Chem.,Vol.A 18, 1991, p. 469**
- **D.J. Love:"Aluminium organic compounds: Key compounds in high solids air drying coating", Paint & Resin, No.12,1989, pages 19-22**
- **L.J. CALBO (Ed.), Handbook of Coatings Additives, M.Dekker, N.Y., 1987, Page 256 & Chapter 13; Metal soaps: Driers, Stabilizers and related compounds**
- **HJohnson, P.C.:Isocyanate Reactions; Advances in Polyurethane Technology, Ed.Buist and Gudgeon, Wiley & Sons, 1968**



Printed by Xerox (UK) Business Services
2.16.7 (HRS)/3.6

## Beschreibung

Die Erfindung betrifft gegen Schädigung durch Licht, Wärme und Sauerstoff stabilisierte Ueberzugsmittel, die als Stabilisator ein o-Hydroxyphenyl-s-triazinderivat enthalten. Hierbei handelt es sich um solche Ueberzugsmittel, die als Härtungskatalysator eine organische Metallverbindung, ein Amin, ein aminogruppenhaltiges Harz oder ein Phosphin enthalten.

Die thermische Härtung von Einbrennlacken kann bei gewissen Typen von Bindemitteln durch Katalysatoren beschleunigt werden. Dadurch sind kürzere Härtungszeiten oder niedrigere Härtungstemperaturen möglich. Je nach dem Typ des Bindemittels können die Katalysatoren Säuren oder Basen sein. Zu den basischen Katalysatoren gehören organische Metallverbindungen wie z.B. Metallchelate, Metallcarbonate oder Organometallverbindungen, oder auch Amine.

Will man die Lichtstabilität eines Ueberzuges erhöhen, so gibt man üblicherweise ein Lichtschutzmittel, insbesondere einen UV-Absorber zu. Die Lichtstabilisierung einiger härtbarer Überzüge, z.B. reaktiver, mit Melamin-Formaldehyd, Harnstoff-Formaldehyd oder Isocyanaten vernetzter Acrylate, durch Zusatz bestimmter Verbindungen vom Typ Bis-o-hydroxyphenyl-s-triazin wird in der Patentschrift US-A-4 826 978 beschrieben.

Die für Ueberzugsmittel am meisten gebrauchten Typen von UV-Absorbern sind die 2-Hydroxybenzophenone und 2-(2-Hydroxyphenyl)-benztriazole. Setzt man solche UV-Absorber einem Ueberzugsmittel zu, das als Härter eine organische Metallverbindung, ein Amin oder Phosphin enthält, so treten Verfärbungen auf, die offensichtlich durch Reaktion des Lichtschutzmittels mit dem Härtungskatalysator entstehen. Als weitere Störung durch den UV-Absorber kann eine Blockierung des Härtungskatalysators eintreten, wodurch eine ungenügende Härtung des Ueberzuges resultiert. Vermutlich tritt eine Chelatierung der Base durch die aromatischen Hydroxylgruppen des UV-Absorbers ein.

Auf der Suche nach UV-Absorbern, die keine Störungen in derart katalysierten Ueberzugsmitteln verursachen, wurde gefunden, dass gewisse Derivate des 2-Hydroxyphenyl-s-triazins die geschilderten Nachteile der anderen UV-Absorber nicht zeigen, obwohl sie auch gute UV-Absorber sind und obwohl sie auch phenolische Hydroxygruppen besitzen, die zu einer Chelatierung fähig sind.

Gegenstand der Erfindung ist ein Ueberzugsmittel, enthaltend

A) ein Bindemittel

B) als Härtungskatalysator eine organische Metallverbindung oder/und ein Amin oder/und ein aminogruppenhaltiges Harz und/oder ein Phosphin und

C) als Stabilisator gegen Schädigung durch Licht, Wärme und Sauerstoff eine Verbindung der Formel I

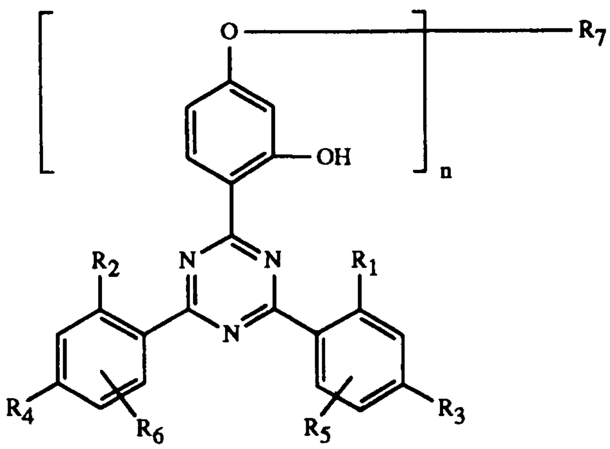

I

worin n 1 oder 2 ist,

$R_1$ und $R_2$ unabhängig voneinander H, $C_1$-$C_{12}$-Alkyl oder Halogenmethyl bedeuten,

$R_3$ und $R_4$ unabhängig voneinander H, OH, $C_1$-$C_{12}$-Alkyl, $C_1$-$C_{18}$-Alkoxy oder Halogen bedeuten,

$R_5$ und $R_6$ unabhängig voneinander H, $C_1$-$C_{12}$-Alkyl oder Halogen bedeuten,

$R_7$, wenn n 1 ist, Wasserstoff, $C_1$-$C_{18}$-Alkyl oder $C_1$-$C_{12}$-Alkyl, das durch OH, $C_1$-$C_{18}$-Alkoxy, Halogen, Phenoxy oder durch $C_1$-$C_{18}$-Alkyl, $C_1$-$C_{18}$-Alkoxy oder Halogen substituiertes Phenoxy, -COOH, -$COOR_8$, -$CONH_2$, -$CONHR_9$, -$CON(R_9)(R_{10})$, -$NH_2$, -$NHR_9$, -$N(R_9)(R_{10})$, -$NHCOR_{11}$, -CN

und/oder $-OCOR_{11}$ substituiert ist, bedeutet oder $R_7$ durch ein oder mehrere O unterbrochenes und durch OH oder $C_1$-$C_{12}$-Alkoxy substituiertes $C_4$-$C_{20}$-Alkyl, $C_3$-$C_6$-Alkenyl, Glycidyl, $C_5$-$C_8$-Cycloalkyl, durch OH, $C_1$-$C_4$-Alkyl oder $-OCOR_{11}$ substituiertes Cyclohexyl, unsubstituiertes oder durch OH, Cl oder $CH_3$ substituiertes $C_7$-$C_{11}$-Phenylalkyl, $-CO-R_{12}$ oder $-SO_2-R_{13}$ bedeutet, und wenn n 2 ist, $C_2$-$C_{16}$-Alkylen, $C_4$-$C_{12}$-Alkenylen, Xylylen, durch ein oder mehrere O unterbrochenes und/oder durch OH substituiertes $C_3$-$C_{20}$-Alkylen, eine Gruppe $-CH_2CH(OH)CH_2O-R_{15}-OCH_2CH(OH)CH_2-$, $-CO-R_{16}-CO-$, $-CO-NH-R_{17}-NH-CO-$ oder $-(CH_2)_m-COO-R_{18}-OCO-(CH_2)_m-$bedeutet, worin m 1-3 ist,

$R_8$ $C_1$-$C_{18}$-Alkyl, $C_3$-$C_{18}$-Alkenyl, durch O, N oder S unterbrochenes und/oder durch OH substituiertes $C_3$-$C_{20}$-Alkyl, durch $-P(O)(OR_{14})_2$, $-N(R_9)(R_{10})$ oder $-OCOR_{11}$ und/oder OH substituiertes $C_1$-$C_4$-Alkyl, Glycidyl, Cyclohexyl oder $C_7$-$C_{11}$-Phenylalkyl bedeutet,
$R_9$ und $R_{10}$ unabhängig voneinander $C_1$-$C_{12}$-Alkyl, $C_3$-$C_{12}$-Alkoxyalkyl, $C_4$-$C_{16}$-Dialkylaminoalkyl oder $C_5$-$C_{12}$-Cycloalkyl bedeuten oder
$R_9$ und $R_{10}$ zusammen $C_3$-$C_9$-Alkylen oder -Oxaalkylen oder -Azaalkylen bedeuten,
$R_{11}$ $C_1$-$C_{18}$-Alkyl, $C_2$-$C_{18}$-Alkenyl oder Phenyl bedeutet,
$R_{12}$ $C_1$-$C_{18}$-Alkyl, $C_2$-$C_{18}$-Alkenyl, Phenyl, $C_1$-$C_{12}$-Alkoxy, Phenoxy, $C_1$-$C_{12}$-Alkylamino, Phenylamino, Tolylamino oder Naphthylamino bedeutet,
$R_{13}$ $C_1$-$C_{12}$-Alkyl, Phenyl, Naphthyl oder $C_7$-$C_{14}$-Alkylphenyl bedeutet,
$R_{14}$ $C_1$-$C_{12}$-Alkyl oder Phenyl bedeutet,
$R_{15}$ $C_2$-$C_{10}$-Alkylen, Phenylen oder eine Gruppe -Phenylen-X-Phenylen- bedeutet, worin X -O-,-S-, $-SO_2-$, $-CH_2-$ oder $-C(CH_3)_2-$ bedeutet,
$R_{16}$ $C_2$-$C_{10}$-Alkylen, -Oxaalkylen oder -Thiaalkylen, Phenylen, Naphthylen, Diphenylen oder $C_2$-$C_6$-Alkenylen bedeutet,
$R_{17}$ $C_2$-$C_{10}$-Alkylen, Phenylen, Naphthylen, Methylendiphenylen oder $C_7$-$C_{15}$-Alkylphenylen bedeutet und
$R_{18}$ $C_2$-$C_{10}$-Alkylen oder durch O unterbrochenes $C_4$-$C_{20}$-Alkylen bedeutet, wobei in Komponente B die 3 Kombinationen organischer Metallverbindungen aus 1. Kobaltnaphthenat, Calciumnaphthanat und Zirkonoctoat, 2. Kobalt-, Blei- und Mangantrockner oder 3. Bleinaphthenat, Cobaltnaphthenat und Mangannaphthenat als Härtungskatalysatoren ausgeschlossen sind.

Das Bindemittel kann jedes beliebige Harz oder Harzgemisch sein, dessen Hartung durch organische Metallverbindungen oder Amine katalysiert werden kann.
Beispiele für solche basisch katalysierbare Bindemittel sind:

1. Acrylatcopolymere mit Alkoxysilan- bzw. Alkoxysiloxan-Seitengruppen, beispielsweise die im US-A-4,772,672 oder US-A-4,444,974 beschriebenen Polymeren,
2. Zweikomponentensysteme aus hydroxylgruppenhaltigen Polyacrylaten und/oder Polyestern und aliphatischen oder aromatischen Polyisocyanaten,
3. Zweikomponentensysteme aus funktionellen Polyacrylaten und einem Polyepoxid, wobei das Polyacrylat Carboxyl-, Anhydrid- oder Aminogruppen enthält.
4. Zweikomponentensysteme aus fluormodifizierten oder siliconmodifizierten hydroxylgruppenhaltigen Polyacrylaten oder Polyestern und aliphatischen oder aromatischen Polyisocyanaten,
5. Zweikomponentensysteme aus (Poly)ketiminen und aliphatischen oder aromatischen Polyisocyanaten,
6. Zweikomponentensysteme aus (Poly)ketiminen und ungesättigten Acrylatharzen oder Acetoacetatharzen oder Methyl-$\alpha$-acrylamido-methylglykolat,
7. Zweikomponentensysteme aus anhydridgruppenhaltigen Polyacrylaten und Polyaminen,
8. Zweikomponentensysteme aus (Poly)oxazolidinen und anhydridgruppenhaltigen Polyacrylaten oder ungesättigten Acrylatharzen oder Polyisocyanaten,
9. Zweikomponentensysteme aus epoxygruppenhaltigen Polyacrylaten und carboxylgruppenhaltigen oder aminogruppenhaltigen Polyacrylaten.
10. Lufttrocknende Alkyd-, Acryl- oder Alkyd-Acrylharze,
11. Polymere auf Basis von Allyl-glycidylether.

Bevorzugt ist die Komponente B ein Bindemittel aus einem funktionellen Acrylatharz und einem Vernetzer.
Die Komponente B ist eine organische Metallverbindung oder/und ein Amin oder/und ein aminogruppenhaltiges Harz oder/und ein Phosphin. Organische Metallverbindungen sind z.B. Metallcarboxylate, insbesondere solche der Metalle Pb, Mn, Co, Zn, Zr oder Cu, oder Metallchelate, insbesondere solche der Metalle Al, Ti oder Zr oder Organometallverbindungen wie z.B. Organozinnverbindungen.

Beispiele für Metallcarboxylate sind die Stearate von Pb, Mn oder Zn, die Octoate von Co, Zn oder Cu, die Naphthenate von Mn und Co oder die entsprechenden Linoleate, Resinate oder Tallate.

Beispiele für Metallchelate sind die Aluminium-, Titan- oder Zirkonium-Chelate von Acetylaceton, Ethylacetylacetat, Salicylaldehyd, Salicylaldoxim, o-Hydroxyacetophenon oder Ethyl-trifluoracetylacetat und die Alkoxide dieser Metalle.

Beispiele für Organozinnverbindungen sind Dibutylzinnoxid, Dibutylzinn-dilaurat oder Dibutylzinn-dioctoat.

Beispiele für Amine sind vor allem tertiäre Amine, wie z.B. Tributylamin, Triethanolamin, N-Methyl-diethanolamin, N-Dimethylethanolamin, N-Ethylmorpholin, N-Methylmorpholin oder Diazabicyclooctan (Triethylendiamin) sowie deren Salze. Weitere Beispiele sind quaternäre Ammoniumsalze, wie z.B. Trimethylbenzylammoniumchlorid.

Aminogruppenhaltige Harze sind gleichzeitig Bindemittel und Härtungskatalysator. Beispiel hierfür sind aminogruppenhaltige Acrylat-copolymere.

Als Härtungskatalysator können auch Phosphine verwendet werden, wie z.B. Triphenylphosphin.

Die o-Hydroxyphenyl-s-triazine der Komponente C sind bekannte Verbindungen oder sind in der EP-A-434 608 beschrieben.
Die Verwendung solcher Verbindungen als UV-Absorber in Ueberzugsmitteln ist z.B. im US-A-4 619 956 beschrieben.

Bevorzugt verwendet man als Komponente C eine Verbindung der Formel I, worin n 1 oder 2 ist,

$R_1$ und $R_2$ unabhängig voneinander H oder $C_1$-$C_4$-Alkyl bedeuten,
$R_3$ und $R_4$ unabhängig voneinander H, OH, $C_1$-$C_4$-Alkyl, $C_1$-$C_4$-Alkoxy oder Halogen bedeuten,
$R_5$ und $R_6$ unabhängig voneinander H oder $C_1$-$C_4$-Alkyl bedeuten,
$R_7$, wenn n 1 ist, Wasserstoff, $C_1$-$C_{18}$-Alkyl, durch OH, $C_1$-$C_{18}$-Alkoxy, Phenoxy, -$COOR_8$, -$CONHR_9$, -$CON(R_9)R_{10}$) und/oder -$OCOR_{11}$ substituiertes $C_1$-$C_6$-Alkyl, Allyl, Glycidyl oder Benzyl bedeutet, und wenn n 2 ist, $C_4$-$C_{12}$-Alkylen, $C_4$-$C_6$-Alkenylen, Xylylen oder durch O unterbrochenes und/oder durch OH substituiertes $C_3$-$C_{20}$-Alkylen bedeutet,
$R_8$ $C_1$-$C_{12}$-Alkyl, $C_3$-$C_{18}$-Alkenyl, durch O unterbrochenes und/oder durch OH substituiertes $C_3$-$C_{20}$-Alkyl oder durch -$P(O)(OR_{14})_2$ substituiertes $C_1$-$C_4$-Alkyl bedeutet,
$R_9$ und $R_{10}$ unabhängig voneinander $C_1$-$C_8$-Alkyl oder Cyclohexyl bedeuten, oder $R_9$ und $R_{10}$ zusammen Pentamethylen oder 3-Oxapentamethylen bedeuten,
$R_{11}$ $C_1$-$C_8$-Alkyl, $C_2$-$C_5$-Alkenyl oder Phenyl bedeutet und
$R_{14}$ $C_1$-$C_4$-Alkyl bedeutet.

Besonders bevorzugt verwendet man als Komponente C eine Verbindung der Formel I,

worin n 1 oder 2 ist,
$R_1$ und $R_2$ unabhängig voneinander H oder $CH_3$ bedeuten,
$R_3$ und $R_4$ unabhängig voneinander H, $CH_3$ oder Cl bedeuten,
$R_5$ und $R_6$ Wasserstoff bedeuten,
$R_7$, wenn n 1 ist, Wasserstoff, $C_1$-$C_{12}$-Alkyl, durch OH, $C_4$-$C_{18}$-Alkoxy, -$COOR_8$, -$CON(R_9)(R_{10})$ und/oder -$OCOR_{11}$ substituiertes $C_1$-$C_4$-Alkyl, Glycidyl oder Benzyl bedeutet, und wenn n 2 ist, $C_6$-$C_{12}$-Alkylen, 2-Butenylen-1,4, Xylylen oder durch O unterbrochenes und/oder durch OH substituiertes $C_3$-$C_{20}$-Alkylen bedeutet,
$R_8$ $C_4$-$C_{12}$-Alkyl, $C_{12}$-$C_{18}$-Alkenyl, durch O unterbrochenes und/oder durch OH substituiertes $C_6$-$C_{20}$-Alkyl oder durch -$P(O)(OR_{14})_2$ substituiertes $C_1$-$C_4$-Alkyl bedeutet, $R_9$ und $R_{10}$ $C_4$-$C_8$-Alkyl bedeuten,
$R_{11}$ $C_1$-$C_8$-Alkyl oder $C_2$-$C_3$-Alkenyl bedeutet und
$R_{14}$ $C_1$-$C_4$-Alkyl bedeutet.

Eine weitere als Komponente C bevorzugte Gruppe sind die Verbindungen der Formel I, worin n 1 oder 2 ist und $R_7$, wenn n 1 ist, eine Gruppe -$CH_2CH(OH)CH_2O$-$R_{19}$ ist, worin

$R_{19}$ $C_1$-$C_{12}$-Alkyl, Phenyl, durch $C_1$-$C_{12}$-Alkyl, $C_1$-$C_{12}$-Alkoxy oder Halogen substituiertes Phenyl oder $C_3$-$C_5$-Alkenoyl bedeutet,
und wenn n 2 ist, $R_7$ eine Gruppe -$CH_2CH(OH)CH_2O$-$R_{15}$-$OCH_2CH(OH)CH_2$-, bedeutet, worin $R_{15}$ $C_2$-$C_{10}$-Alkylen, Phenylen oder eine Gruppe -Phenylen-X-Phenylen- bedeutet, worin X -O-, -S-, -$SO_2$-, -$CH_2$- oder $C(CH_3)_2$- bedeutet.

Beispiele einzelner Verbindungen der Formel I sind die folgenden Verbindungen

$R_7$ = -H
-$C_2H_5$

$-C_4H_9$
$-C_8H_{17}$
$-C_{12}H_{25}$
$-C_{18}H_{37}$
-Cyclohexyl
$-CH_2$ Phenyl
$-CH_2CH_2OH$
$-CH_2CH_2OCOCH_3$
$-CH_2CH_2OCOCH=CH_2$
$-CH_2CH(OH)C_8H_{17}$
$-CH_2CH(OH)C_{12}H_{25}$
$-CH_2CH(OH)CH_2OC_8H_{17}$

$$-CH_2CH(OH)CH_2O-(CH_2)_{12\text{-}14}CH_3$$

$-CH_2CH(OH)CH_2O$Phenyl
$-CH_2CH(OH)CH_2OCOC(CH_3)=CH_2$

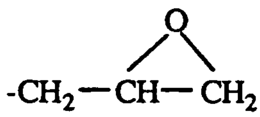

$-CH_2COOH$
$-CH_2CH_2COOC_4H_9$
$-CH_2COOC_8H_{17}$
$-CH_2COO(CH_2CH_2O)_7H$
$-CH_2COOCH_2CH(OH)CH_2OC_4H_9$
$-CH_2COOCH_2CH(CH_3)OCH_2CH(CH_3)OCH(CH_3)CH_3$
$-CH_2COOCH_2P(O)(OC_2H_5)_2$
$-CH_2COOCH_2CH(OH)CH_2P(O)(OC_4H_9)_2$
$-CH_2COO(CH_2)_7CH=CHC_8H_{17}$
$-CH_2COOCH_2CH_2OCH_2CH_2OC_6H_{13}$
$-CH_2CON(C_2H_5)_2$

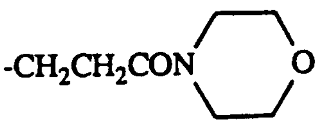

$-CH_2CONHCH_2CH_2CH_2N(CH_3)_2$
$-CH_2CONHC_8H_{17}$
$-CH_2CON(C_8H_{17})_2$

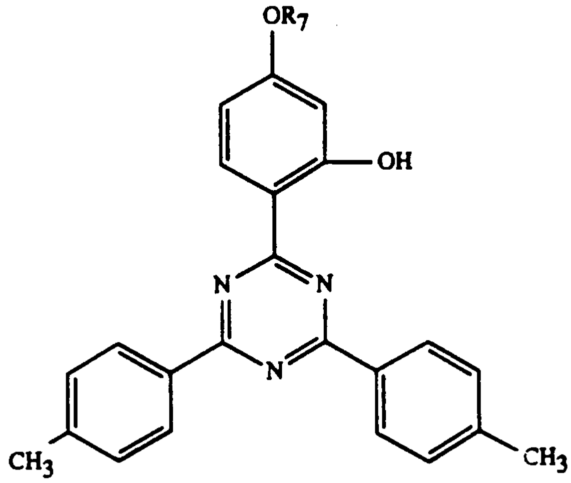

$R_7$=

$-C_4H_9$
$-C_8H_{17}$
$-C_{12}H_{25}$
$-CH_2CH(OH)CH_2OC_8H_{17}$

$$-CH_2CH(OH)CH_2O-(CH_2)_{\overline{12-14}}CH_3$$

$-CH_2COOC_2H_5$
$-CH_2COOCH_2OCH_3$
$-CH_2COOCH_2CH=CH$-Phenyl

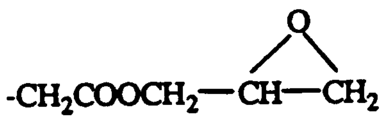

$-CH_2COOCH_2CH(OH)CH_2OC_8H_{17}$
$-CH_2$Phenyl
$-CH_2CH=CH_2$
$-CH_2CON(C_4H_9)_2$
$-CH_2CH_2CONH_8H_{17}$

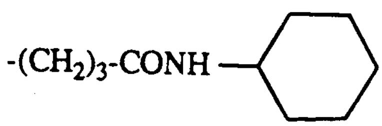

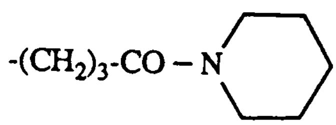

$-CO-OC_6H_{13}$
$-CH_2CH_2Cl$
$-CH_2CH_2CN$

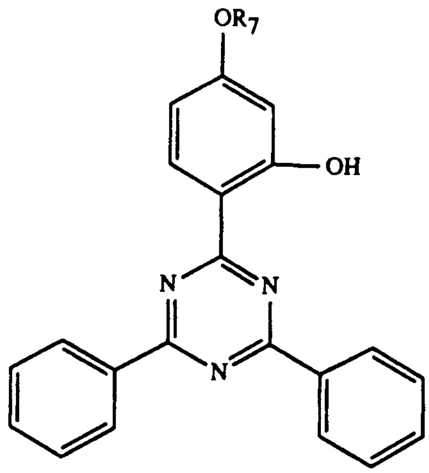

$R_7 =$ $-H$
$-CH_3$
$-C_3H_7$
$-C_6H_{13}$
$-C_8H_{17}$
$-C_{12}H_{25}$
$-CH_2CH(OH)CH_2OC_8H_{17}$

$$-CH_2CH(OH)CH_2O-(CH_2)_{12\text{-}14}CH_3$$

$-CH_2CH(OH)Phenyl$
$-CH_2CH(OH)CH_2OCOPhenyl$
$-CH_2CH(CH_3)OCOCH_3$
$-SO_2-C_{12}H_{15}$

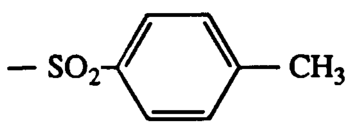

$-CH_2COOC_{10}H_{21}$
$-CH_2CONHCH_2CH_2OCH_3$
$-CH_2CH_2CONHCH_2Phenyl$
$-(CH_2)_3CONH(CH_2)_3N(C_2H_5)_2$
$-CH_2CONHC_{12}H_{25}$

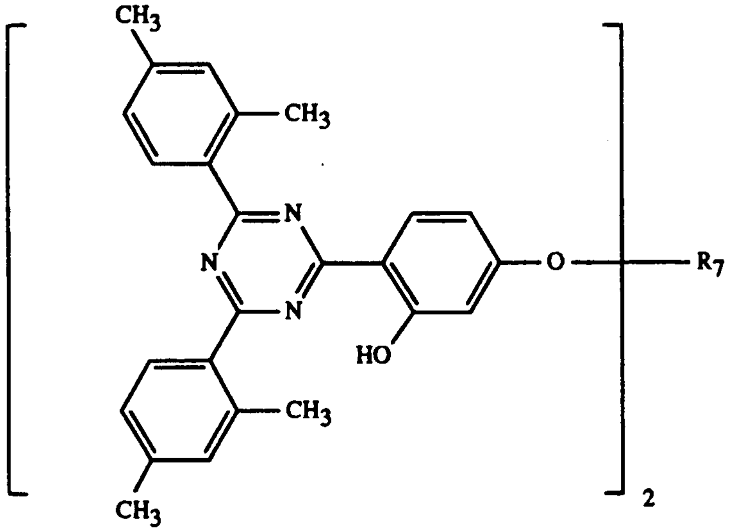

$R_7$ = $-CH_2CH(OH)CH_2$--$CH_2$-CH=CH-$CH_2$-

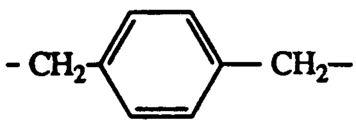

$-(CH_2)_4-$
$-(CH_2)_6-$
$-(CH_2)_8$
$-(CH_2)_{12}-$
$-CH_2CH(OH)CH_2O-CH_2CH_2-OCH_2CH(OH)CH_2-$
$-CH_2CH(OH)CH_2O-(CH_2)_6-OCH_2CH(OH)CH_2-$

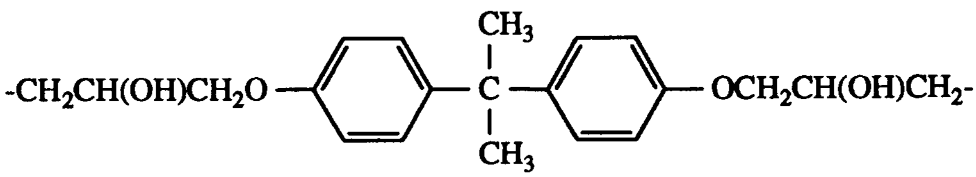

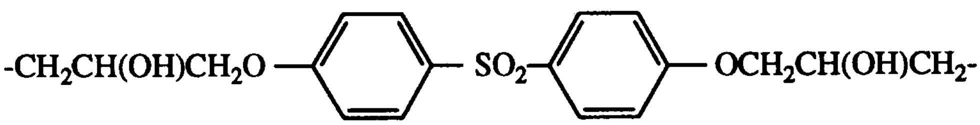

$-CH_2COO-(CH_2)_6-OCOCH_2$

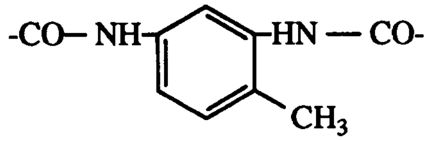

-CO-$(CH_2)_8$-CO-

Das Ueberzugsmittel enthält vorzugsweise auf 100 Gew.-Teile festes Bindemittel A 0,01-20 Gew.-Teile Härtungskatalysator B und 0,01-10 Gew.-Teile C, insbesondere 0,05-5 Gew.-Teile B und 0,2-5 Gew.-Teile C.

Das Ueberzugsmittel kann ausser den Komponenten A, B und C weitere Komponenten enthalten, z.B. Lösungsmittel, Pigmente, Farbstoffe, Weichmacher, Stabilisatoren, Thioxotropiemittel oder/und Verlaufhilfsmittel.

Meistens enthalten die Ueberzugsmittel ein organisches Lösungsmittel oder Lösungsmittelgemisch, in dem das Bindemittel löslich ist. Das Ueberzugsmittel kann aber auch eine wässrige Lösung oder Dispersion sein. Das Vehikel kann auch ein Gemisch eines organischen Lösungmittels und Wasser sein. Das Ueberzugsmittel kann auch ein feststoffreicher Lack (high solids Lack) sein oder kann lösungsmittelfrei (Pulverlack) sein.

Die Pigmente können anorganische, organische oder metallische Pigmente sein. Vorzugsweise enthalten die erfindungsgemässen Ueberzugsmittel keine Pigmente und werden als Klarlack verwendet.

Das Ueberzugsmittel kann ausser dem Stabilisator der Formel I noch andere Stabilisatoren enthalten, wie z.B. Antioxidantien, weitere Lichtschutzmittel, Metalldesaktivatoren, Phosphite oder Phosphonite.

Beispiele hierfür sind die folgenden Stabilisatoren:

1. Antioxidantien

1.1. Alkylierte Monophenole, z.B. 2,6-Di-tert.butyl-4-methylphenol, 2-Tert.butyl-4,6-dimethylphenol, 2,6-Di-tert.butyl-4-ethylphenol, 2,6-Di-tert.butyl-4-n-butylphenol, 2,6-Di-tert.butyl-4-i-butylphenol, 2,6-Di-cyclopentyl-4-methylphenol, 2-(α-Methylcyclohexyl)-4,6-dimethylphenol, 2,6-Di-octadecyl-4-methylphenol, 2,4,6-Tri-cyclohexylphenol, 2,6-Di-tert.butyl-4-methoxymethylphenol, 2,6-Di-nonyl-4-methylphenol.

1.2. Alkylierte Hydrochinone, z.B. 2,6-Di-tert.butyl-4-methoxyphenol, 2,5-Di-tert.butyl-hydrochinon, 2,5-Di-tert.amyl-hydrochinon, 2,6-Diphenyl-4-octadecyloxyphenol.

1.3. Hydroxylierte Thiodiphenylether, z.B. 2,2'-Thio-bis-(6-tert.-butyl-4-methylphenol), 2,2'-Thio-bis-(4-octylphenol), 4,4'-Thio-bis-(6-tert.butyl-3-methylphenol), 4,4'-Thio-bis-(6-tert.butyl-2-methylphenol).

1.4. Alkyliden-Bisphenole, z.B. 2,2'-Methylen-bis-(6-tert.butyl-4-methylphenol), 2,2'-Methylen-bis-(6-tert.butyl-4-ethylphenol), 2,2'-Methylen-bis-[4-methyl-6-(α-methyl-cyclohexyl)-phenol] 2,2'-Methylen-bis-(4-methyl-6-cyclohexylphenol), 2,2'-Methylen-bis-(6-nonyl-4-methylphenol), 2,2'-Methylen-bis-(4,6-di-tert.butylphenol), 2,2'-Ethyliden-bis-(4,6-di-tert.butylphenol), 2,2'-Ethyliden-bis-(6-tert.butyl-4-isobutylphenol), 2,2'-Methylen-bis-[6-(α-methylbenzyl)-4-nonylphenol], 2,2'-Methylen-bis-[6-(α,α,dimethylbenzyl)-4-nonylphenol], 4,4'-Methylen-bis-(2,6-di-tert.-butylphenol), 4,4'-Methylen-bis-(6-tert.butyl-2-methylphenol), 1,1-Bis-(5-tert.butyl-4-hydroxy-2-methylphenyl)-butan, 2,6-Bis-(3-tert.butyl-5-methyl-2-hydroxybenzyl)-4-methylphenol, 1,1,3-Tris-(5-tert.butyl-4-hydroxy-2-methylphenyl)-butan, 1,1-Bis-(5-tert.butyl-4-hydroxy-2-methyl-phenyl)-3-n-dodecylmercaptobutan,

Ethylenglycol-bis-[3,3-bis-(3'-tert.-butyl-4'-hydroxyphenyl)-butyrat], Bis-(3-tert.butyl-4-hydroxy-5-methyl-phenyl)-dicyclopentadien, Bis-[2-(3'-tert.butyl-2'-hydroxy-5'-methyl-benzyl)-6-tert.butyl-4-methyl-phenyl]-terephthalat.

1.5 Benzylverbindungen, z.B. 1,3,5-Tris-(3,5-di-tert.butyl-4-hydroxy-benzyl)-2,4,6-trimethylbenzol, Bis-(3,5-di-tert.butyl-4-hydroxybenzyl)-sulfid, 3,5-Di-tert.butyl-4-hydroxybenzyl-mercaptoessigsäure-isooctylester, Bis-(4-tert.butyl-3-hydroxy-2,6-dimethylbenzyl)dithiol-terephthalat, 1,3,5-Tris-(3,5-di-tert.butyl-4-hydroxybenzyl)-isocyanurat, 1,3,5-Tris-(4-tert.butyl-3-hydroxy-2,6-dimethylbenzyl)-isocyanurat, 3,5-Di-tert.butyl-4-hydroxybenzyl-phosphonsäure-dioctadecylester, Ca-Salz des 3,5-Di-tert.butyl-4-hydroxybenzyl-phosphonsäure-monoethylester, 1,3,5-Tris-(3,5-dicyclohexyl-4-hydroxybenzyl)isocyanurat.

1.6. Acylaminophenole, z.B. 4-Hydroxy-laurinsäureanilid,4-Hydroxystearinsäureanilid, 2,4-Bis-(octylmercapto)-6-(3,5-di-tert.butyl-4-hydroxyanilino )-s-triazin, N-(3,5-di-tert.butyl-4-hydroxyphenyl)-carbaminsäureoctylester.

1.7. Ester der β-(3,5-Di-tert.butyl-4-hydroxyphenyl)-propionsäure mit ein-oder mehrwenigen Alkoholen, wie z.B. mit

Methanol, Octa- decanol, 1 ,6-Hexandiol, Neopentylglycol, Thiodiethylenglycol, Diethylenglycol, Triethylenglycol, Pentaerythrit, Tris-(hydroxyethyl)-isocyanurat, N,N'-Bis-(hydroxyethyl)-oxalsäurediamid.

1.8. Ester der β-(5-tert.Butyl-4-hydroxy-3-methylphenyl)-propionsäure mit ein- oder mehrwenigen Alkoholen, wie z.B. mit Methanol, Octadecanol, 1,6-Hexandiol, Neopentylglycol, Thiodiethylenglycol, Diethylenglycol, Triethylenglycol, Pentaerythrit, Tris-(hydroxy)ethyl-isoeyanurat, N,N'-Bis-(hydroxyethyl)-oxalsäurediamid.

1.9. Ester der β-(3,5-Dicyclohexyl-4-hydroxyphenyl)-propionsäure mit ein-oder mehrwenigen Alkoholen, wie z.B. mit Methanol, Octadecanol, 1,6-Hexandiol, Neopentylglycol, Thiodiethylenglycol, Diethylenglycol, Triethylenglycol, Pentaerythrit, Tris-(hydroxy)ethyl-isoeyanurat, N,N'-Bis-(hydroxyethyl)-oxalsäurediamid.

1.10. Amide der β-(3,5-Di-tert-butyl-4-hydroxyphenyl)-propionsäure, wie z.B. N,N'-Bis-(3,5-di-tert.butyl-4-hydroxyphenylpropionyl)-hexamethylendiamin, N,N'-Bis-(3,5-di-tert.-butyl-4-hydroxyphenylpropionyl)-trimethylendiamin, N,N'-Bis-(3,5-di-tert.butyl-4-hydroxyphenylpropionyl)-hydrazin.

2. UV-Absorber und Lichtschutzmittel

2.1. 2-(2'-Hydroxyphenyl)-benztriazole, wie z.B. das 5'-Methyl-, 3',5'-Di-tert.butyl-, 5'-tert.Butyl-, 5'-(1,1,3,3-Tetramethylbutyl)-, 5-Chlor-3',5'-di-tert.butyl-, 5-Chlor-3'-tert.butyl-5'-methyl-, 3'-sec.Butyl-5'-tert.butyl, 4'-Octoxy-,3',5'-Di-tert.amyl-, 3',5'-Bis-(α,α-dimethylbenzyl)-Derivat.

2.2. 2-Hydroxybenzophenone, wie z.B. das 4-Hydroxy-, 4-Methoxy-, 4-Octoxy-, 4-Decyloxy-, 4-Dodecyloxy, 4-Benzyloxy-, 4,2',4'-Trihydroxy-, 2'-Hydroxy-4,4'-dimethoxy-Derivat.

2.3. Ester von gegebenenfalls substituierten Benzoesäuren, wie z.B. 4-tert.Butyl-phenylsalicylat, Phenylsalicylat, Octylphenyl-salicylat, Dibenzoylresorcin, Bis-(4-tert.butyl-benzoyl)-resorcin, Benzoylresorcin, 3,5-Di-tert.butyl-4-hydroxybenzoesäure-2,4-di-tert.butylphenylester, 3,5-Di-tert.butyl-4-hydroxybenzoesäurehexadecylester.

2.4. Acrylate, wie z.B. α-Cyan-β,β-diphenylacrylsäure-ethylester bzw. - isooctylester, α-Carbomethoxy-zimtsäuremethylester, α-Cyano-β-methyl-p-methoxy-zimtsäuremethylester bzw. -butylester, α-Carbomethoxy-p-methoxy-zimtsäure-methylester, N-(β-Carbomethoxy-β-cyanovinyl)-2-methyl-indolin.

2.5. Nickelverbindungen, wie z.B. Nickelkomplexe des 2,2'-Thio-bis-[4-(1,1,3,3-tetramethylbutyl)-phenols], wie der 1:1- oder der 1:2-Komplex, gegebenenfalls mit zusätzlichen Liganden, wie n-Butylamin, Triethanolamin oder N-Cyclohexyl-diethanolamin, Nickeldibutyldithiocarbamat, Nickelsalze von 4-Hydroxy-3,5-di-tert.butylbenzyl-phosphonsäure-monoalkylestern, wie vom Methyl- oder Ethylester, Nickelkomplexe von Ketoximen, wie von 2-Hydroxy-4-methyl-phenyl-undecylketoxim, Nickelkomplexe des 1-Phenyl-4-lauroyl-5-hydroxy-pyrazols, gegebenenfalls mit zusätzlichen Liganden.

2.6. Sterisch gehinderte Amine, wie z.B. Bis-(2,2,6,6-tetramethyl-piperidyl)-sebacat, Bis-(1,2,2,6,6-pentamethylpiperidyl)-sebacat, n-Butyl-3,5-di-tert.butyl-4-hydroxybenzylmalonsäure-bis(1,2,2,6,6-pentamethylpiperidyl)-ester, Kondensationsprodukt aus 1-Hydroxyethyl-2,2,6,6-tetramethyl-4-hydroxypiperidin und Bernsteinsäure, Kondensationsprodukt aus N,N'-Bis-(2,2,6,6-Tetramethyl-4-piperidyl)-hexamethylendiamin und 4-tert.Octylamino-2,6-dichlor-1,3,5-s-triazin, Tris-(2,2,6,6-tetramethyl-4-piperidyl)-nitrilotriacetat Tetrakis-(2,2,6,6-tetramethyl-4-piperidyl)-1,2,3,4-butantetraoat, 1,1'-(1,2-Ethandiyl)-bis-(3,3,5,5-tetramethyl-piperazinon).

2.7. Oxalsäurediamide, wie z.B. 4,4'-Di-octyloxy-oxanilid, 2,2'-Di-octyloxy-5,5'-di-tert.butyl-oxanilid, 2,2'-Di-dodecyloxy-5,5'di-tert.butyl-oxanilid, 2-Ethoxy-2'-ethyl-oxanilid, N,N'-Bis-(3-dimethylaminopropyl)-oxalamid, 2-Ethoxy-5-tert.butyl-2'-ethyloxanilid und dessen Gemisch mit 2-Ethoxy-2'-ethyl-5,4'-di-tert.butyl-oxanilid, Gemische von o-und p-Methoxy sowie von o- und p-Ethoxy-di-substituierten Oxaniliden.

3. Metalldesaktivatoren, wie z.B. N,N'-Diphenyloxalsäurediamid, N-Salicylal-N'-salicyloylhydrazin, N,N'-Bis-(salicyloyl)-hydrazin, N,N'-Bis-(3,5-di-tert.butyl-4-hydroxyphenylpropionyl)-hydrazi n, 3-Salicyloylamino-1,2,4-triazol, Bis-(benzyliden)-oxalsäuredihydrazid.

4. Phosphite und Phosphonite, wie z.B. Triphenylphosphit, Diphenylalkylphosphite, Phenyldialkylphosphite, Tris-(nonylphenyl)-phosphit, Trilaurylphosphit, Trioctadecylphosphit, Distearyl-pentaerythritdiphosphit, Tris-(2,4-di-tert.butylphenyl)-phosphit, Diisodecylpentaerythrit-diphosphit, Bis-(2,4-di-tert.butylphenyl)-pentaerythritdiphosphit, Tristearyl-sorbit-triphosphit, Tetrakis-(2,4-di-tert.butylphenyl)-4,4'-biphenylen-diphosphonit, 3,9-Bis-(2,4-di-tert.butylphenoxy)-2,4,8,10-tetraoxa-3,9-diphosphaspiro[5.5]undecan.

Zur Erzielung maximaler Lichtbeständigkeit ist vor allem der Zusatz von sterisch gehinderten Aminen, wie sie oben unter 2.6 aufgeführt sind, von Interesse. Die Erfindung betrifft daher auch ein Ueberzugsmittel, das neben den Komponenten A, B und C als Komponente D ein Lichtschutzmittel vom Typ der sterisch gehinderten Amine enthält.

Vorzugsweise handelt es sich dabei um ein 2,2,6,6-Tetraalkylpiperidinderivat, das mindestens eine Gruppe der Formel

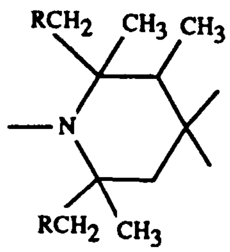

enthält, worin R Wasserstoff oder Methyl, insbesondere Wasserstoff, ist.

Die Komponente D wird vorzugsweise in einer Menge von 0,1-5 Gew.-Teilen auf 100 Gew.-Teile des festen Bindemittels verwendet.

Beispiele für als Komponente D verwendbare Tetraalkylpiperidinderivate sind der EP-A-356677, Seiten 3-17, Abschnitte a) bis f) zu entnehmen. Die genannten Abschnitte dieser EP-A werden als Teil der vorliegenden Beschreibung betrachtet. Besonders zweckmässig setzt man folgende Tetraalkylpiperidinderivate ein:

Bis-(2,2,6,6-tetramethylpiperidin-4-yl)-succinat,
Bis-(2,2,6,6-tetramethylpiperidin-4-yl)-sebacat,
Bis-(1,2,2,6,6-pentamethylpiperidin-4-yl)-sebacat,
Butyl-(3,5-di-tert.-butyl-4-hydroxybenzyl)-malonsäure-di-(1,2,2,6,6-pentamethylpiperidin-4-yl)-ester,
Bis-(1-octyloxy-2,2,6,6-tetramethylpiperidin-4-yl)-sebacat,
Tetra(2,2,6,6-tetramethylpiperidin-4-yl)-butan-1,2,3,4-tetracarboxylat,
Tetra(1,2,2,6,6-pentamethylpiperidin-4-yl)-butan-1,2,3,4-tetracarboxylat, 2,2,4,4-Tetramethyl-7-oxa-3,20-diaza-21-oxo-dispiro[5.1.11.2]-heneicosan,
8-Acetyl-3-dodecyl-1,3,8-triaza-7,7,9,9-tetramethylspiro[4,5]-decan-2,4-dion,

oder eine Verbindung der Formeln

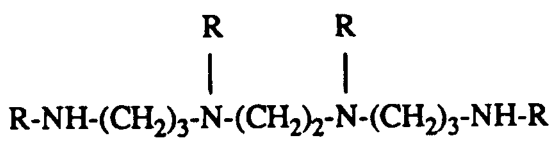

mit R =

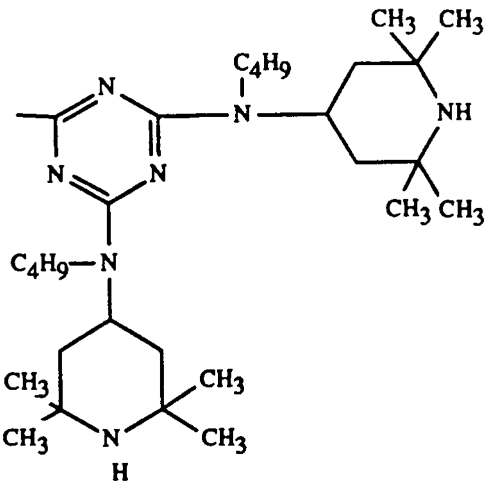

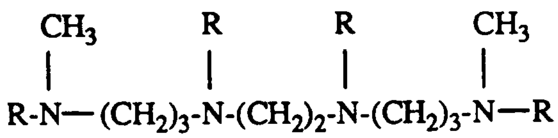

mit R =

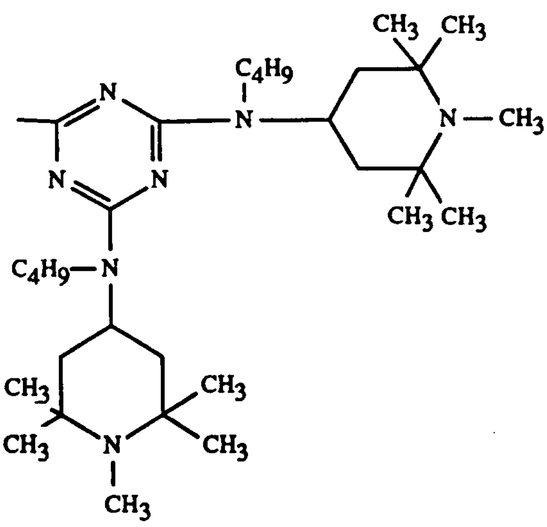

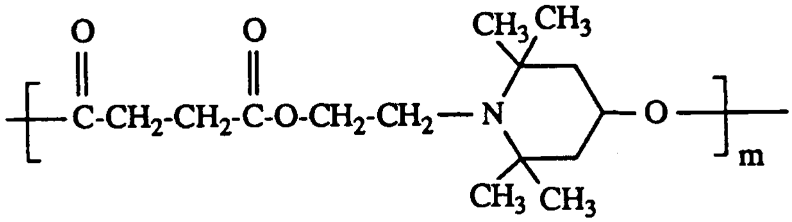

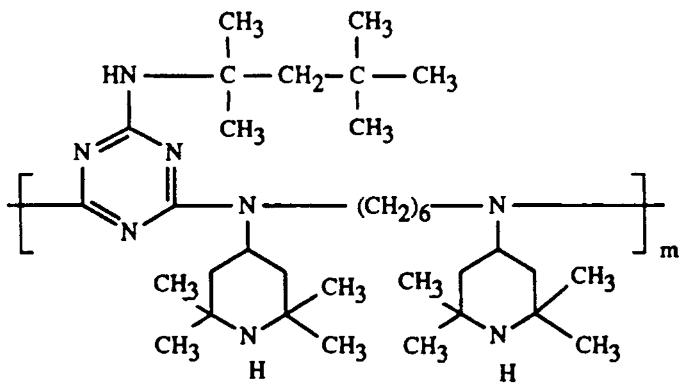

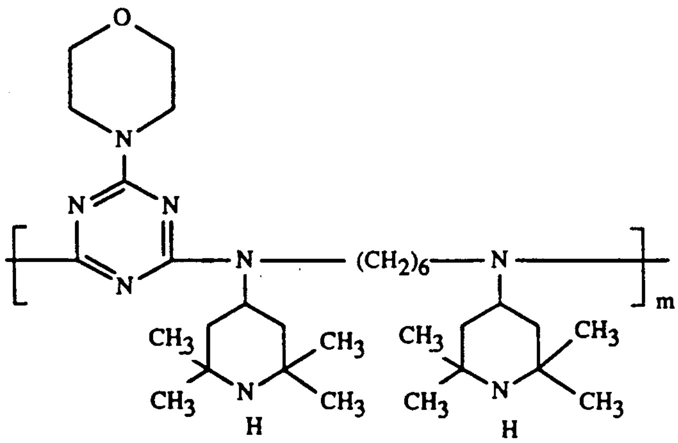

oder

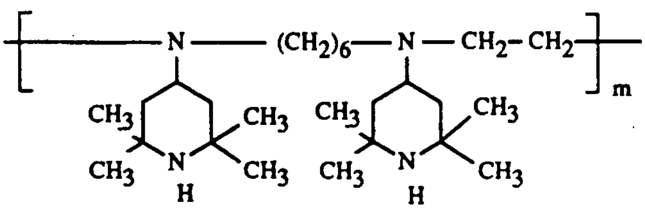

wobei m ein Wert von 5-50 bedeutet.

Die erfindungsgemässen Ueberzugsmittel können auf beliebige Substrate aufgebracht werden, beispielsweise auf Metall, Holz, Kunststoff oder keramische Materialien. Vorzugsweise werden sie beim Lackieren von Automobilen als Decklack verwendet. Besteht der Decklack aus zwei Schichten, wovon die untere Schicht pigmentiert ist und die obere Schicht nicht pigmentiert ist, so kann das erfindungsgemässe Ueberzugsmittel für die obere oder die untere Schicht oder für beide Schichten verwendet werden, vorzugsweise jedoch für die obere Schicht.

Die erfindungsgemässen Ueberzugsmittel können auf die Substrate nach den üblichen Verfahren aufgebracht werden, beispielsweise durch Streichen, Besprühen, Giessen, Tauchen oder Elektrophorese.

Die Härtung der Ueberzüge kann - je nach dem Bindemittelsystem - bei Raumtemperatur oder durch Erwärmen erfolgen. Vorzugsweise härtet man die Ueberzüge bei 50-150°C, Pulverlacke auch bei höheren Temperaturen.

Die so erhaltenen Ueberzüge zeichnen sich durch eine hohe Lichtbeständigkeit, sowie durch eine erhöhte thermisch-oxidative Beständigkeit aus.

In einer weiteren Ausgestaltung des Verfahrens verwendet man solche Bindemittel, in dessen ein 2-Hydroxyphenyl-s-triazin durch Copolymerisation oder Copolykondensation eingebaut ist. Hierzu eignen sich solche Verbindungen der Formel I, in denen der Rest $R_7$ eine copolymerisierbare ethylenisch ungesättigte Gruppe oder zur

Copolykondensation geeignete funktionelle Gruppe enthält. In diesem Fall kann das Ueberzugsmittel nur aus den Komponenten A und B bestehen.

Die folgenden Beispiele beschreiben die erfindungsgemässen Ueberzugsmittel weiter, ohne die Erfindung auf die Beispiele zu beschränken. Darin bedeuten Teile Gewichtsteile und % Gewichts-%.

In den Beispielen werden folgende erfindungsgemässe UV-Absorber verwendet:

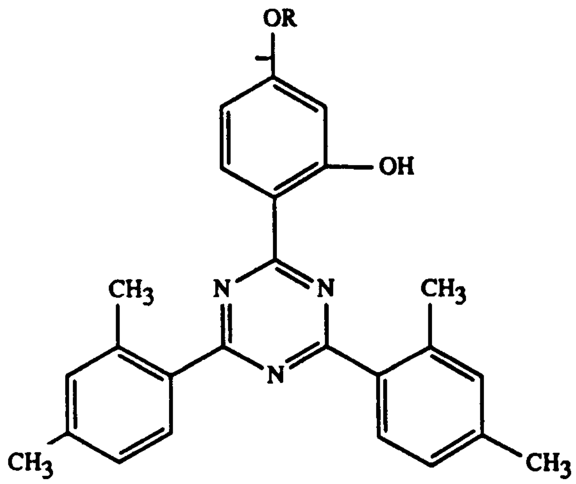

UV-1: R = $-C_8H_{17}$
UV-2: R = $-CH_2CH(OH)CH_2OC_4H_9$
UV-3: R = $-CH_2COO(CH_2)_8CH{=}CH-C_8H_{17}$
UV-4: R = -H
UV-5: R =

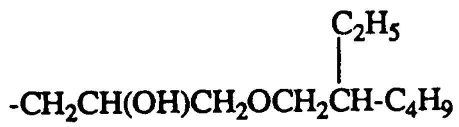

UV-6: R =

$$-CH_2CH(OH)CH_2O(CH_2)_{\overline{12\text{-}14}}CH_3$$

Ausserdem werden die folgenden UV-Absorber als Vergleich verwendet:

V-1: Umsetzungsprodukt von 2-[2-Hydroxy-3-tert.butyl-5-(2-methoxy-carbonylethyl)-phenyl]-benztriazol mit Polyethylenglykol 300
V-2: 2-Hydroxy-4-dodecycloxybenzophenon
V-3: 2,4-Dihydroxybenzophenon
V-4: 2-[2-Hydroxy-3,5-di(α,α-dimethylbenzyl)-phenyl]-benztriazol.

Beispiel 1 - Zweikomponenten-Polyacrylat-urethan-Lack mit einer Kombination aus einem metallhaltigen Katalysator und einem Amin

Ein hydroxylgruppenhaltiger Acrylat-Lack wird durch Mischen der folgenden Komponenten hergestellt:

75 Teile einer 60 %igen Lösung eines hydroxylgruppenhaltigen Acrylatharzes in Xylol (Macrynal® SM 510, Hoechst AG)
15 Teile Butylglykolacetat
6,1 Teile eines aromatischen Lösungsmittelgemisches (Solvesso® 100, Esso AG)
3,6 Teile Methyl-isobutylketon
0,1 Teile Zink-octoat (als 8 %ige Lösung in Toluol)
0,2 Teile eines Verlaufhilfsmittels (Byk® 300, Byk-Chemie)

Dazu werden 1,5 Teile eines der in Tabelle 1 aufgeführten UV-Absorber (gelöst in 5-10 Teilen Xylol) zugegeben. Dies entspricht 2 % UV-Absorber bezogen auf festes Bindemittel (Acrylat + Isocyanat).

Diese Formulierungen werden mit 30 Teilen eines trimerisierten Diisocyanates (Desmodur® N 75, Bayer AG) und 1,5 Teilen Diazabicyclooctan (entsprechend 2 % auf festes Bindemittel) vermischt.

Proben dieser Lacke werden auf Aluminiumbleche, die mit einem weissen Coil-coat beschichtet sind, aufgetragen und 30 Minuten bei 60°C gehärtet. Es resultiert eine Schichtdicke von ca 40 µm.

Die Probenbleche werden in einem UVCON®-Bewitterungsgerät (Atlas Corp., UVB-313-Lampen, Zyklus: 4 h UV-Licht 60°C, 4 h Kondensation 50°C) bewittert. Nach 24 h wird der Yellowness-Index (YI) nach ASTM D 1925 gemessen.

Tabelle 1

| UV-Absorber | YI nach 24 h UVCON |
|---|---|
| 2 % UV-1 | 1,2 |
| 2 % UV-2 | 0,5 |
| 2 % UV-3 | 2,3 |
| 2 % V-1 | 6,5 |

Beispiel 2 - Polyacrylat-Melamin-Lack mit einem Metallchelat-Katalysator

Ein Klarlack wird bereitet aus:

59,2 Teilen einer 50 %igen Lösung eines hydroxylgruppenhaltigen Acrylatharzes (Uracron® 2263B, DSM Resins NV)
11,6 Teilen eines 90 %igen Melaminharzes (Cymel® 327, Amer. Cyanamid Corp.)
19,4 Teilen Xylol
5,5 Teilen Butylglykolacetat
3,3 Teilen Butanol
1,0 Teilen einer 1 %igen Xylol-Lösung eines Verlaufhilfsmittels (Baysilon® A, Bayer AG)

Dieser Lack enthält 40 % Festkörper (Bindemittel). Dazu mischt man 0,8 Teile eines der in Tabelle 2 aufgeführten UV-Absorber (gelöst in 5-10 Teilen Xylol), entsprechend 2 %, bezogen auf Festkörper.

Zu dieser Formulierung werden als Härtungskatalysator 1,6 Teile Aluminium-tris-(acetylacetonat), gelöst in Xylol, zugegeben, entsprechend 4 % bezogen auf festes Bindemittel.

Der so erhaltene Klarlack wird mit einem Rakel auf Aluminiumbleche aufgetragen, die mit einem weissen Coil-coat beschichtet sind. Die Proben werden 30 Minuten bei 130°C gehärtet, wobei eine Schichtdicke von ca 40 µm resultiert. Anschliessend wird der Yellowness-Index (YI) nach ASTM D 1925 gemessen.

Tabelle 2

| UV-Absorber | YI nach der Härtung |
|---|---|
| keiner | -1,8 |
| 2 % UV-1 | -1,6 |
| 2 % UV-4 | 0,9 |
| 2 % V-2 | 16,8 |
| 2 % V-3 | 28,6 |
| 2 % V-4 | 25,6 |

Beispiel 3 - Polyacrylat-Epoxidharz-Lack mit Amin-Katalysator

Ein Klarlack wird durch Mischung folgender Komponenten hergestellt:

57,5 Teile einer 50%igen Lösung eines funktionellen Acrylatharzes (Ucar® 882, Union Carbide Co.)
0,3 Teile eines Verlaufhilfsmittels (Baysilon® OL 17, Bayer AG) (20%ig)
3,7 Teile eines aliphatischen Polyglycidylethers (Ucarlink® Crosslinker, Union Carbide Co.)
3,5 Teile n-Butanol
35 Teile Xylol
100

Der Lack enthält ca. 33 % Festkörper. Dazu werden 2 % (bezogen auf Festkörper) Diazabicyclooctan (gelöst in Xylol) als Beschleuniger zugegeben, sowie 2 % (bezogen auf Festkörper) der in Tabelle 3 aufgeführten UV-Absorber.

Die Proben werden mit Xylol zur Spritzfähigkeit verdünnt und auf ein mit einem weissen Coil Coat beschichtetes Aluminiumblech gespritzt. Nach 15 min Ablüften werden die Proben 30 min bei 70°C gehärtet. Es resultiert eine Trockenfilmdicke von ca. 40 µm. Die Proben werden anschliessend 30 min auf 100°C erwärmt und der Yellowness Index nach ASTM D 1925 gemessen.

Tabelle 3

| UV-Absorber | Yellowness Index |
|---|---|
| UV-1 | 1,4 |
| UV-5 | 1,3 |
| V-3 | 8,5 |

Beispiel 4 - Polyacrylat-Epoxidharz-Lack mit Amin-Katalysator

Es wird wie in Beispiel 3 gearbeitet, jedoch wird der Klarlack auf Aluminiumbleche aufgetragen, die mit einem Silbermetallic Basislack lackiert sind. Die Proben werden nach der Härtung (30 min bei 70°C) in einem UVCON-Bewitterungsgerät UVB-313-Lampen, (Zyklus: 8 h UV-Licht 70°C, 4 h Kondensation 50°C) bewittert. Nach 48 h Bewitterung wird der Yellowness Index gemessen.

Tabelle 4

| UV-Absorber | Yellowness Index |
|---|---|
| 2 % UV-1 | -0,7 |
| 2 % UV-5 | -0,6 |
| V-3 | 3,9 |

Beispiel 5 - Zweikomponenten-Polyacrylat-Lack mit einem aminogruppenhaltigen Harz

Komponente A:

59 Teile eines aminogruppenhaltigen Polyacrylates (Setalux® AA-8402 XS 55 AKZO Resins BV) (55%ige Lösung)
19 Teile Butylacetat
13,7 Teile Xylol
3 Teile 1-Methoxy-1-propylacetat
3 Teile Diacetonalkohol
1,5 Teile Isobutanol
0,5 Teile Verlaufhilfsmittel 1 (Byk®300, Byk-Chemie GmbH)
0,3 Teile Verlaufhilfsmittel II (Baysilon® MA, Bayer AG)
100

Komponente B:

36 Teile eines epoxidgruppenhaltigen Polyacrylates (Setalux® AA 8501 BX 60, AKZO Resins BV) (60%ige Lösung)
9 Teile Butylacetat
5 Teile Xylol
50

Komponente C:

10 Teile Xylol
8 Teile Diacetonalkohol
7 Teile 1-Methoxy-2-propylacetat
5 Teile Isobutanol
30

Die Komponenten A, B und C werden vermischt und ergeben einen Klarlack mit ca. 30 % Festkörper. Dazu werden die in Tabelle 5 aufgeführten UV-Absorber (gelöst in Xylol) in einer Menge von 2 % bezogen auf Festkörper zugegeben.

Die Proben werden mit einem Rakel auf mit weissem Coil Coat beschichtete Aluminiumbleche aufgetragen und 30 min bei 60°C gehärtet. Es resultiert eine Trockenfilmdicke von ca. 30 µm. Nach 48 h Lagerung bei Raumtemperatur wird der Yellowness-Index der Proben gemessen.

Tabelle 5

| UV-Absorber | Yellowness-Index |
|---|---|
| keiner | -0,7 |
| 2 % UV-1 | -0,1 |
| 2 % UV-2 | 0,6 |
| 2 % UV-5 | 0,1 |
| 2 % UV-6 | -0,1 |
| 2 % V-1 | 6,5 |
| 2 % V-2 | 7,1 |
| 2 % V-3 | 8,3 |

Tabelle 5 (fortgesetzt)

| UV-Absorber | Yellowness-Index |
|---|---|
| 2 % V-4 | 13,0 |

Beispiel 6 - Polyacrylatharz mit Alkoxysilangruppen und Metallchelat-Katalysator

Es wird ein Copolymer aus 35 % Methylacrylat, 50 % 3-(Trimethoxysilyl)-propylmethacrylat und 15 %

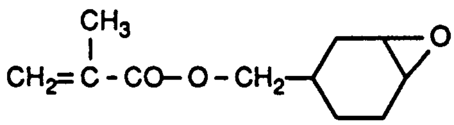

nach US-A-4 772 672 hergestellt. Das erhaltene Harz hat ein Molekulargewicht (Mw) von 21 300 und einen Gehalt von 0,56 mol/kg Epoxid-Sauerstoff.

Das Copolymer wird in Methyl-isobutylketon gelöst und mit 2 % UV-Absorber und 5 % Aluminium-tris(acetylacetonat) - jeweils bezogen auf Festkörper - vermischt. Der Lack wird mit einem Rakel auf mit einem weissen Coil Coat beschichtete Aluminiumbleche aufgetragen und 30 min bei 130°C gehärtet. Die resultierende Trockenfilmdicke beträgt ca. 18 µm. Anschliessend wird der Yellowness-Index der Proben gemessen.

Tabelle 6

| UV-Absorber | Yellowness-Index |
|---|---|
| 2 % UV-5 | 2,2 |
| 2 % V-2 | 6,3 |
| 2 % V-3 | 7,9 |

**Patentansprüche**

1. Ueberzugsmittel, enthaltend

A) ein Bindemittel
B) als Härtungskatalysator eine organische Metallverbindung oder/und ein Amin oder/und ein aminogruppenhaltiges Harz und/oder ein Phosphin und
C) als Stabilisator gegen Schädigung durch Licht, Wärme und Sauerstoff eine Verbindung der Formel I

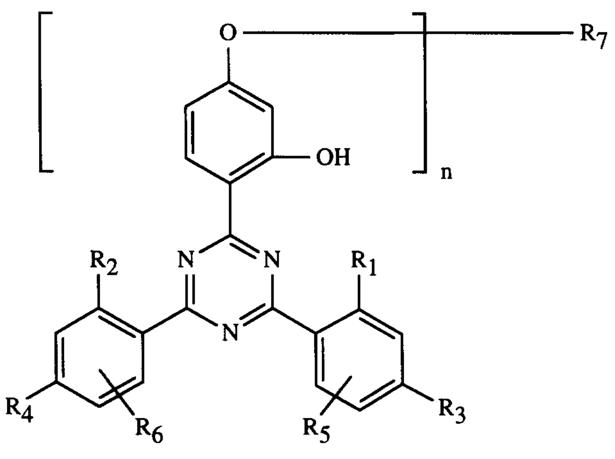

I

worin n 1 oder 2 ist,
$R_1$ und $R_2$ unabhängig voneinander H, $C_1$-$C_{12}$-Alkyl oder Halogenmethyl bedeuten,
$R_3$ und $R_4$ unabhängig voneinander H, OH, $C_1$-$C_{12}$-Alkyl, $C_1$-$C_{18}$-Alkoxy oder Halogen bedeuten,
$R_5$ und $R_6$ unabhängig voneinander H, $C_1$-$C_{12}$-Alkyl oder Halogen bedeuten,
$R_7$, wenn n 1 ist, Wasserstoff, $C_1$-$C_{18}$-Alkyl oder $C_1$-$C_{12}$-Alkyl, das durch OH, $C_1$-$C_{18}$-Alkoxy, Halogen, Phenoxy oder durch $C_1$-$C_{18}$-Alkyl, $C_1$-$C_{18}$-Alkoxy oder Halogen substituiertes Phenoxy, -COOH, -$COOR_8$, -$CONH_2$, -$CONHR_9$, -$CON(R_9)(R_{10})$, -$NH_2$, -$NHR_9$, -$N(R_9)(R_{10})$, -$NHCOR_{11}$, -CN und/oder -$OCOR_{11}$ substituiert ist, bedeutet oder $R_7$ durch ein oder mehrere O unterbrochenes und durch OH oder $C_1$-$C_{12}$-Alkoxy substituiertes $C_4$-$C_{20}$-Alkyl, $C_3$-$C_6$-Alkenyl, Glycidyl, $C_5$-$C_8$-Cycloalkyl, durch OH, $C_1$-$C_4$-Alkyl oder -$OCOR_{11}$ substituiertes Cyclohexyl, unsubstituiertes oder durch OH, Cl oder $CH_3$ substituiertes $C_7$-$C_{11}$-Phenylalkyl, -CO-$R_{12}$ oder -$SO_2$-$R_{13}$ bedeutet, und wenn n 2 ist, $C_2$-$C_{16}$-Alkylen, $C_4$-$C_{12}$-Alkenylen, Xylylen, durch ein oder mehrere O unterbrochenes und/oder durch OH substituiertes $C_3$-$C_{20}$-Alkylen, eine Gruppe -$CH_2CH(OH)CH_2O$-$R_{15}$-$OCH_2CH(OH)CH_2$-, -CO-$R_{16}$-CO-, -CO-NH-$R_{17}$-NH-CO- oder -$(CH_2)_m$COO-$R_{18}$-OCO-$(CH_2)_m$- bedeutet, worin m 1-3 ist,
$R_8$ $C_1$-$C_{18}$-Alkyl, $C_3$-$C_{18}$-Alkenyl, durch O, N oder S unterbrochenes und/oder durch OH substituiertes $C_3$-$C_{20}$-Alkyl, durch -$P(O)(OR_{14})_2$, -$N(R_9)(R_{10})$ oder -$OCOR_{11}$ und/oder OH substituiertes $C_1$-$C_4$-Alkyl, Glycidyl, Cyclohexyl oder $C_7$-$C_{11}$-Phenylalkyl bedeutet,
$R_9$ und $R_{10}$ unabhängig voneinander $C_1$-$C_{12}$-Alkyl, $C_3$-$C_{12}$-Alkoxyalkyl, $C_4$-$C_{16}$-Dialkylaminoalkyl oder $C_5$-$C_{12}$-Cycloalkyl bedeuten oder
$R_9$ und $R_{10}$ zusammen $C_3$-$C_9$-Alkylen oder -Oxaalkylen oder -Azaalkylen bedeuten,
$R_{11}$ $C_1$-$C_{18}$-Alkyl, $C_2$-$C_{18}$-Alkenyl oder Phenyl bedeutet,
$R_{12}$ $C_1$-$C_{18}$-Alkyl, $C_2$-$C_{18}$-Alkenyl, Phenyl, $C_1$-$C_{12}$-Alkoxy, Phenoxy, $C_1$-$C_{12}$-Alkylamino, Phenylamino, Tolylamino oder Naphthylamino bedeutet,
$R_{13}$ $C_1$-$C_{12}$-Alkyl, Phenyl, Naphthyl oder $C_7$-$C_{14}$-Alkylphenyl bedeutet,
$R_{14}$ $C_1$-$C_{12}$-Alkyl oder Phenyl bedeutet,
$R_{15}$ $C_2$-$C_{10}$-Alkylen, Phenylen oder eine Gruppe -Phenylen-X-Phenylen- bedeutet, worin X -O-, -S-, -$SO_2$-, -$CH_2$- oder -$C(CH_3)_2$- bedeutet,
$R_{16}$ $C_2$-$C_{10}$-Alkylen, -Oxaalkylen oder -Thiaalkylen, Phenylen, Naphthylen, Diphenylen oder $C_2$-$C_6$-Alkenylen bedeutet,
$R_{17}$ $C_2$-$C_{10}$-Alkylen, Phenylen, Maphthylen, Methylendiphenylen oder $C_7$-$C_{15}$-Alkylphenylen bedeutet und
$R_{18}$ $C_2$-$C_{10}$-Alkylen oder durch O unterbrochenes $C_4$-$C_{20}$-Alkylen bedeutet, wobei in Komponente B die 3 Kombinationen organischer Metallverbindungen aus

1. Kobaltnaphthenat, Calciumnaphthenat und Zirconoctoat,
2. Kobalt-, Blei- und Mangantrockner oder
3. Bleinaphthenat, Kobaltnaphthenat und Mangannaphthenat

als Härtungskatalysatoren ausgeschlossen sind.

**2.** Ueberzugsmittel gemäss Anspruch 1, dadurch gekennzeichnet, dass die Komponente B ein Bindemittel aus einem funktionellen Acrylatharz und einem Vernetzer ist.

**3.** Ueberzugsmittel gemäss Anspruch 1, dadurch gekennzeichnet, dass der Härtungskatalysator (Komponente B) ein Metallcarboxylat oder ein Metallchelat oder eine Organozinnverbindung oder ein Amin ist.

**4.** Ueberzugsmittel gemäss Anspruch 3, dadurch gekennzeichnet, dass der Härtungskatalysator ein Carboxylat von einem der Metalle Pb, Mn, Co, Zn, Zr oder Cu ist oder ein Chelat von einem der Metalle Al, Ti oder Zr ist oder ein tertiäres Amin ist.

**5.** Ueberzugsmittel gemäss Anspruch 1, dadurch gekennzeichnet, dass die Komponente C eine Verbindung der Formel I ist, worin n 1 oder 2 ist,

$R_1$ und $R_2$ unabhängig voneinander H oder $C_1$-$C_4$-Alkyl bedeuten,
$R_3$ und $R_4$ unabhängig voneinander H, OH, $C_1$-$C_4$-Alkyl, $C_1$-$C_4$-Alkoxy oder Halogen bedeuten,
$R_5$ und $R_6$ unabhängig voneinander H oder $C_1$-$C_4$-Alkyl bedeuten,
$R_7$, wenn n 1 ist, Wasserstoff, $C_1$-$C_{18}$-Alkyl, durch OH, $C_1$-$C_{18}$-Alkoxy, Phenoxy, -$COOR_8$, -$CONHR_9$, -$CON(R_9)(R_{10})$ und/oder -$OCOR_{11}$ substituiertes $C_1$-$C_6$-Alkyl, Allyl, Glycidyl oder Benzyl bedeutet, und wenn n

2 ist, $C_4$-$C_{12}$-Alkylen, $C_4$-$C_6$-Alkenylen, Xylylen oder durch ein oder mehrere O unterbrochenes und/oder durch OH substituiertes $C_3$-$C_{20}$-Alkylen bedeutet,

$R_8$ $C_1$-$C_{12}$-Alkyl, $C_3$-$C_{18}$-Alkenyl, durch O unterbrochenes und/oder durch OH substituiertes $C_3$-$C_{20}$-Alkyl oder durch -P(O)($OR_{14}$)$_2$ substituiertes $C_1$-$C_4$-Alkyl bedeutet,
$R_9$ und $R_{10}$ unabhängig voneinander $C_1$-$C_8$-Alkyl oder Cyclohexyl bedeuten, oder $R_9$ und $R_{10}$ zusammen Pentamethylen oder 3-Oxapentamethylen bedeuten,
$R_{11}$ $C_1$-$C_8$-Alkyl, $C_2$-$C_5$-Alkenyl oder Phenyl bedeutet und
$R_{14}$ $C_1$-$C_4$-Alkyl bedeutet.

**6.** Ueberzugsmittel gemäss Anspruch 1, dadurch gekennzeichnet, dass die Komponente C eine Verbindung der Formel 1 ist, worin n 1 oder 2 ist,

$R_1$ und $R_2$ unabhängig voneinander H oder $CH_3$ bedeuten,
$R_3$ und $R_4$ unabhängig voneinander H, $CH_3$ oder Cl bedeuten,
$R_5$ und $R_6$ Wasserstoff bedeuten,
$R_7$, wenn n 1 ist, Wasserstoff, $C_1$-$C_{12}$-Alkyl, durch OH, $C_4$-$C_{18}$-Alkoxy, -$COOR_8$, -CON($R_9$)($R_{10}$) und/oder -$OCOR_{11}$ substituiertes $C_1$-$C_4$-Alkyl, Glycidyl oder Benzyl bedeutet, und wenn n 2 ist, $C_6$-$C_{12}$-Alkylen, 2-Butenylen, 1,4-Xylylen oder durch O unterbrochenes und/oder durch OH substituiertes $C_3$-$C_{20}$-Alkylen bedeutet,
$R_8$ $C_4$-$C_{12}$-Alkyl, $C_{12}$-$C_{18}$-Alkenyl, durch O unterbrochenes und/oder durch OH substituiertes $C_6$-$C_{20}$-Alkyl oder durch -P(O)($OR_{14}$)$_2$ substituiertes $C_1$-$C_4$-Alkyl bedeutet,
$R_9$ und $R_{10}$ $C_4$-$C_8$-Alkyl bedeuten,
$R_{11}$ $C_1$-$C_8$-Alkyl oder $C_2$-$C_3$-Alkenyl bedeutet und
$R_{14}$ $C_1$-$C_4$-Alkyl bedeutet.

**7.** Ueberzugsmittel gemäss Anspruch 1, dadurch gekennzeichnet, dass die Komponente C eine Verbindung der Formel I ist, worin n 1 oder 2 ist und $R_7$, wenn n 1 ist, eine Gruppe -$CH_2CH(OH)CH_2O$-$R_{19}$ ist, worin $R_{19}$ $C_1$-$C_{12}$-Alkyl, Phenyl, durch $C_1$-$C_{12}$-Alkyl, $C_1$-$C_{12}$-Alkoxy oder Halogen substituiertes Phenyl oder $C_3$-$C_5$-Alkenoyl bedeutet, und wenn n 2 ist, $R_7$ eine Gruppe -$CH_2CH(OH)CH_2O$-$R_{15}$-$OCH_2CH(OH)CH_2$-, bedeutet, worin $R_{15}$ die in Anspruch 1 gegebene Bedeutung hat.

**8.** Ueberzugsmittel gemäss Anspruch 1, enthaltend auf 100 Gew.-Teile festes Bindemittel A 0,01 bis 20 Gew.-Teile Härtungskatalysator B und 0,1-10 Gew.-Teile Stabilisator C.

**9.** Ueberzugsmittel gemäss Anspruch 1, enthaltend neben den Komponenten A, B und C als weitere Komponenten Lösungsmittel, Pigmente, Farbstoffe, Weichmacher, Stabilisatoren, Thixotropiemittel oder/und Verlaufhilfsmittel.

**10.** Ueberzugsmittel gemäss Anspruch 9, enthaltend neben den Komponenten A, B und C als Komponente D ein Lichtschutzmittel vom Typ der sterisch gehinderten Amine.

**11.** Verwendung eines Ueberzugsmittels gemäss Anspruch 1 als Decklack für Automobile.

**12.** Lackfilm, erhalten durch Härtung eines Ueberzugsmittels gemäss Anspruch 1.

**13.** Verwendung von Verbindungen der Formel I gemäß Anspruch 1 als Stabilisatoren in Überzugsmitteln, die ein Bindemittel und mindestens einen Härtungskatalysator aus der Klasse der organischen Metallverbindungen, Amine, aminogruppen haltigen Harze und Phosphine enthalten, wobei die 3 Kombinationen organischer Metallverbindungen aus

1. Kobaltnaphthenat, Calciumnaphthenat und Zirconoctoat,
2. Kobalt-, Blei- und Mangantrockner oder
3. Bleinaphthenat, Kobaltnaphthenat und Mangannaphthenat
als Härtungskatalysatoren ausgeschlossen sind.

## Claims

**1.** A coating composition comprising

A) a binder,

B) as curing catalyst, an organic metallic compound and/or an amine and/or an amino group-containing resin and/or a phosphine, and

C) as stabiliser against damage induced by light, heat and oxygen, a compound of formula I

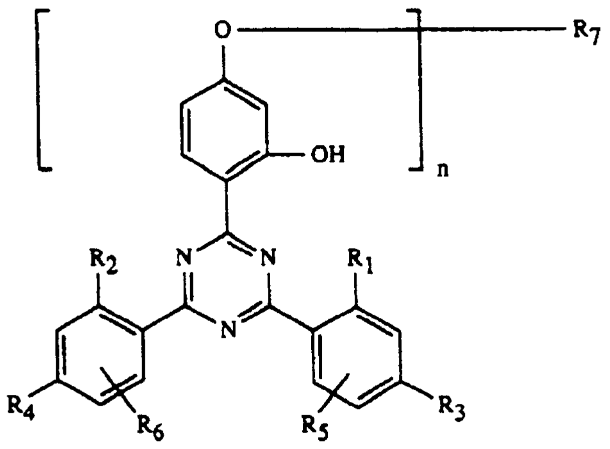

I

wherein n is 1 or 2,

$R_1$ and $R_2$ are each independently of the other H, $C_1$-$C_{12}$alkyl or halomethyl,

$R_3$ and $R_4$ are each independently of the other H, OH, $C_1$-$C_{12}$alkyl, $C_1$-$C_{18}$alkoxy or halogen,

$R_5$ and $R_6$ are each independently of the other H, $C_1$-$C_{12}$alkyl or halogen,

$R_7$, when n is 1, is hydrogen, $C_1$-$C_{18}$alkyl or $C_1$-$C_{12}$alkyl which is substituted by OH, $C_1$-$C_{18}$alkoxy, halogen, phenoxy or phenoxy which is substituted by $C_1$-$C_{18}$alkyl, $C_1$-$C_{18}$alkoxy or halogen, -COOH, $-COOR_8$, $-CONH_2$, $-CONHR_9$, $-CON(R_9)(R_{10})$, $-NH_2$, $-NHR_9$, $-N(R_9)(R_{10})$, $-NHCOR_{11}$, -CN and/or $-OCOR_{11}$, or $R_7$ is $C_4$-$C_{20}$alkyl which is interrupted by one or more O and substituted by OH or $C_1$-$C_{12}$alkoxy, or is $C_3$-$C_6$alkenyl, glycidyl, $C_5$-$C_8$cycloalkyl, cyclohexyl which is substituted by OH, $C_1$-$C_4$alkyl or $-OCOR_{11}$, $C_7$-$C_{11}$phenylalkyl which is unsubstituted or substituted by OH, Cl or $CH_3$, or is $-CO-R_{12}$ or $-SO_2-R_{13}$, and, when n is 2, is $C_2$-$C_{16}$alkylene, $C_4$-$C_{12}$alkenylene, xylylene, $C_3$-$C_{20}$alkylene which is interrupted by one or more O and/or substituted by OH, a group $-CH_2CH(OH)CH_2O-R_{15}-OCH_2CH(OH)CH_2-$, $-CO-R_{16}-CO-$, $-CO-NH-R_{17}-NH-CO-$ or $-(CH_2)_m-COO-R_{18}-OCO-(CH_2)_m-$, wherein m is 1-3,

$R_8$ is $C_1$-$C_{18}$alkyl, $C_3$-$C_{18}$alkenyl, $C_3$-$C_{20}$alkyl which is interrupted by O, N or S and/or substituted by OH, $C_1$-$C_4$alkyl which is substituted by $-P(O)(OR_{14})_2$, $-N(R_9)(R_{10})$ or $-OCOR_{11}$ and/or OH, or is glycidyl, cyclohexyl or $C_7$-$C_{11}$phenylalkyl,

$R_9$ and $R_{10}$ are each independently of the other $C_1$-$C_{12}$alkyl, $C_3$-$C_{12}$alkoxyalkyl, $C_4$-$C_{16}$dialkylaminoalkyl or $C_5$-$C_{12}$cycloalkyl, or

$R_9$ and $R_{10}$ together are $C_3$-$C_9$alkylene or $C_3$-$C_9$oxaalkylene or $C_3$-$C_9$azaalkylene,

$R_{11}$ is $C_1$-$C_{18}$alkyl, $C_2$-$C_{18}$alkenyl or phenyl,

$R_{12}$ is $C_1$-$C_{18}$alkyl, $C_2$-$C_{18}$alkenyl, phenyl, $C_1$-$C_{12}$alkoxy, phenoxy, $C_1$-$C_{12}$alkylamino, phenylamino, tolylamino or naphthylamino,

$R_{13}$ is $C_1$-$C_{12}$alkyl, phenyl, naphthyl or $C_7$-$C_{14}$alkylphenyl,

$R_{14}$ is $C_1$-$C_{12}$alkyl or phenyl,

$R_{15}$ is $C_2$-$C_{10}$alkylene, phenylene or a -phenylene-X-phenylene- group, wherein X is -O-, -S-, $-SO_2-$, $-CH_2-$ or $-C(CH_3)_2-$,

$R_{16}$ is $C_2$-$C_{10}$alkylene, $C_2$-$C_{10}$oxaalkylene or $C_2$-$C_{10}$thiaalkylene, phenylene, naphthylene, diphenylene or $C_2$-$C_6$alkenylene,

$R_{17}$, is $C_2$-$C_{10}$alkylene, phenylene, naphthylene, methylenediphenylene or $C_7$-$C_{15}$alkylphenylene, and

$R_{18}$ is $C_2$-$C_{10}$alkylene or $C_4$-$C_{20}$alkylene which is interrupted by O,

where, in component B, the 3 combinations of organic metallic compounds comprising

1. cobalt naphthenate, calcium naphthenate and zirconium octoate,
2. cobalt, lead and manganese driers, or
3. lead naphthenate, cobalt naphthenate and manganese naphthenate

are excluded as curing catalysts.

2. A coating composition according to claim 1, wherein component A is a binder based on a functional acrylate resin and a crosslinking agent.

3. A coating composition according to claim 1, wherein the curing catalyst (component B) is a metal carboxylate or a metal chelate or an organotin compound or an amine.

4. A coating composition according to claim 3, wherein the curing catalyst is a carboxylate of one of the metals Pb, Mn, Co, Zn, Zr or Cu, or is a chelate of one of the metals Al, Ti or Zr, or is a tertiary amine.

5. A coating composition according to claim 1, wherein component C is a compound of formula I wherein n is 1 or 2,

$R_1$ and $R_2$ are each independently of the other H or $C_1$-$C_4$alkyl,
$R_3$ and $R_4$ are each independently of the other H, OH, $C_1$-$C_4$alkyl, $C_1$-$C_4$alkoxy or halogen,
$R_5$ and $R_6$ are each independently of the other H or $C_1$-$C_4$alkyl,
$R_7$, when n is 1, is hydrogen, $C_1$-$C_{18}$alkyl, $C_1$-$C_6$alkyl which is substituted by OH, $C_1$-$C_{18}$alkoxy, phenoxy, -$COOR_8$, -$CONHR_9$, -$CON(R_9)(R_{10})$ and/or -$OCOR_{11}$, or is allyl, glycidyl or benzyl, and, when n is 2, is $C_4$-$C_{12}$alkylene, $C_4$-$C_6$alkenylene, xylylene or $C_3$-$C_{20}$alkylene which is interrupted by one or more O and/or substituted by OH,
$R_8$ is $C_1$-$C_{12}$alkyl, $C_3$-$C_{18}$alkenyl, $C_3$-$C_{20}$alkyl which is interrupted by O and/or substituted by OH, or $C_1$-$C_4$alkyl which is substituted by -$P(O)(OR_{14})_2$,
$R_9$ and $R_{10}$ are each independently of the other $C_1$-$C_8$alkyl or cyclohexyl, or $R_9$ and $R_{10}$ together are pentamethylene or 3-oxapentamethylene,
$R_{11}$ is $C_1$-$C_8$alkyl, $C_2$-$C_5$alkenyl or phenyl, and
$R_{14}$ is $C_1$-$C_4$alkyl.

6. A coating composition according to claim 1, wherein component C is a compound of formula I wherein n is 1 or 2,

$R_1$ and $R_2$ are each independently of the other H or $CH_3$,
$R_3$ and $R_4$ are each independently of the other H, $CH_3$ or Cl,
$R_5$ and $R_6$ are hydrogen,
$R_7$, when n is 1, is hydrogen, $C_1$-$C_{12}$alkyl, $C_1$-$C_4$alkyl which is substituted by OH, $C_4$-$C_{18}$alkoxy, -$COOR_8$, -$CON(R_9)(R_{10})$ and/or -$OCOR_{11}$, or is glycidyl or benzyl, and, when n is 2, is $C_6$-$C_{12}$alkylene, 2-butenylene, 1,4-xylylene or $C_3$-$C_{20}$alkylene which is interrupted by O and/or substituted by OH,
$R_8$ is $C_4$-$C_{12}$alkyl, $C_{12}$-$C_{18}$alkenyl, $C_6$-$C_{20}$alkyl which is interrupted by O and/or substituted by OH, or is $C_1$-$C_4$alkyl which is substituted by -$P(O)(OR_{14})_2$,
$R_9$ and $R_{10}$ are $C_4$-$C_8$alkyl,
$R_{11}$ is $C_1$-$C_8$alkyl or $C_2$-$C_3$alkenyl, and
$R_{14}$ is $C_1$-$C_4$alkyl.

7. A coating composition according to claim 1, wherein component C is a compound of formula I wherein n is 1 or 2 and $R_7$, when n is 1, is a group -$CH_2CH(OH)CH_2O$-$R_{19}$, wherein $R_{19}$ is $C_1$-$C_{12}$alkyl, phenyl, phenyl which is substituted by $C_1$-$C_{12}$alkyl, $C_1$-$C_{12}$alkoxy or halogen, or is $C_3$-$C_5$alkenoyl and, when n is 2, $R_7$ is a group -$CH_2CH(OH)CH_2O$-$R_{15}$-$OCH_2CH(OH)CH_2$, wherein $R_{15}$ is as defined in claim 1.

8. A coating composition according to claim 1 comprising, per 100 parts by weight of solid binder A, 0.01 to 20 parts by weight of curing catalyst B and 0.1-10 parts by weight of stabiliser C.

9. A coating composition according to claim 1 comprising as further components, in addition to components A, B and C, solvents, pigments, dyes, plasticisers, stabilisers, thixotropic agents and/or levelling agents.

10. A coating composition according to claim 9 comprising, in addition to components A, B and C, a light stabiliser of the sterically hindered amine type as component D.

11. Use of a coating composition according to claim 1 as topcoat for automobiles.

12. A coating film obtained by curing a coating composition according to claim 1.

**13.** Use of a compound of formula I according to claim 1 as stabiliser in a coating composition which comprises a binder and at least one curing catalyst from the class of the organic metallic compounds, amines, amino group-containing resins and phosphines, where the 3 combinations of organic metallic compounds comprising

1. cobalt naphthenate, calcium naphthenate and zirconium octoate,
2. cobalt, lead and manganese driers, or
3. lead naphthenate, cobalt naphthenate and manganese naphthenate

are excluded as curing catalysts.

## Revendications

**1.** Revêtement contenant :

A) un liant,
B) comme catalyseur de durcissement, un composé organométallique et/ou une amine et/ou une résine aminée et/ou une phosphine, et
C) comme stabilisant contre une dégradation par la lumière, la chaleur et l'oxygène, un composé de formule (I) :

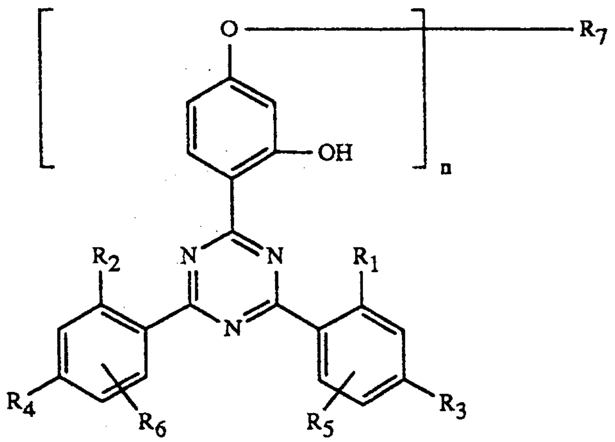

I

dans laquelle n vaut 1 ou 2,

$R_1$ et $R_2$, indépendamment l'un de l'autre sont H ou des radicaux alkyle en $C_1$ à $C_{12}$ ou halogénométhyle,
$R_3$ et $R_4$, indépendamment l'un de l'autre, sont H, OH, ou des radicaux alkyle en $C_1$ à $C_{12}$, alcoxy en $C_1$ à $C_{18}$ ou halogéno,
$R_5$ et $R_6$, indépendamment l'un de l'autre sont H ou des radicaux alkyle en $C_1$ à $C_{12}$ ou halogéno,
$R_7$, quand n vaut 1, est un hydrogène ou un radical alkyle en $C_1$ à $C_{18}$ ou alkyle en $C_1$ à $C_{12}$, qui est substitué par des substituants OH, alcoxy en $C_1$ à $C_{18}$, halogéno, phénoxy ou phénoxy substitué par des substituants alkyle en $C_1$ à $C_{18}$, alcoxy en $C_1$ à $C_{18}$ ou halogéno, -COOH, $-COOR_8$, $-CONH_2$, $-CONHR_9$, $-CON(R_9)(R_{10})$, $-NH_2$, $-NHR_9$, $-N(R_9)(R_{10})$, $-NHCOR_{11}$, -CN et/ou $-OCOR_{11}$, ou bien $R_7$ est un radical alkyle en $C_4$ à $C_{20}$, alcényle en $C_3$ à $C_6$, glycidyle, cycloalkyle an $C_5$ à $C_8$, interrompus par un ou plusieurs atomes d'oxygène et substitués par des substituants OH ou alcoxy an $C_1$ à $C_{12}$, un radical cyclohexyle substitué par des substituants OH, alkyle en $C_1$ à $C_4$ ou $-OCOR_{11}$, phénylalkyle an $C_7$ à $C_{11}$ non substitué ou substitué par des substituants OH, Cl ou $CH_3$, ou encore $-CO-R_{12}$ ou $-SO_2-R_{13}$, et, quand n vaut 2, est un radical alkylène en $C_2$ à $C_{16}$, alcénylène en $C_4$ à $C_{12}$, xylylène, alkylène en $C_3$ à $C_{20}$ interrompus par un ou plusieurs atomes d'oxygène et/ou substitués par des substituants OH, un groupe $-CH_2CH(OH)CH_2O-R_{15}-OCH_2CH(OH)CH_2-$, $-CO-R_{16}-CO-$, $-CO-NH-R_{17}-NH-CO-$ ou $-(CH_2)_m-COO-R_{18}-OCO-(CH_2)_m-$, où m vaut de 1 à 3,
$R_8$ est un radical alkyle en $C_1$ à $C_{18}$, alcényle en $C_3$ à $C_{18}$, alkyle en $C_3$ à $C_{20}$ interrompus par des atomes d'oxygène, d'azote et de soufre et/ou substitués par des substituants OH, alkyle en $C_1$ à $C_4$, glycidyle, cyclohexyle ou phénylalkyle an $C_7$ à $C_{11}$ substitués par $-P(O)(OR_{14})_2$, $-N(R_9)(R_{10})$ ou $-OCOR_{11}$ et/ou OH,
$R_9$ et $R_{10}$, indépendamment l'un de l'autre, sont des radicaux alkyle en $C_1$ à $C_{12}$, alcoxyalkyle an $C_3$ à $C_{12}$,

dialkylaminoalkyle an $C_4$ à $C_{16}$ ou cycloalkyle an $C_5$ à $C_{12}$, ou bien $R_9$ et $R_{10}$ forment ensemble un radical alkylène ou oxaalkylène ou azaalkylène en $C_3$ à $C_9$,
$R_{11}$ est un radical alkyle an $C_1$ à $C_{18}$, alcényle en $C_2$ à $C_{18}$ ou phényle,
$R_{12}$ est un radical alkyle en $C_1$ à $C_{18}$, alcényle an $C_2$ à $C_{18}$, phényle, alcoxy an $C_1$ à $C_{12}$, phénoxy, alkylamino en $C_1$ à $C_{12}$, phénylamino, tolylamino ou naphtylamino,
$R_{13}$ est un radical alkyle an $C_1$ à $C_{12}$, phényle, naphtyle ou alkylphényle an $C_7$ à $C_{14}$,
$R_{14}$ est un radical alkyle an $C_1$ à $C_{12}$ ou phényle,
$R_{15}$ est un radical alkylène an $C_2$ à $C_{10}$, phénylène, ou encore un groupe -phénylène-X-phénylène- où X est -O-, -S-, $-SO_2-$, $-CH_2-$ ou $-C(CH_3)_2-$,
$R_{16}$ est un radical alkylène, oxaalkylène ou thiaalkylène en $C_2$ à $C_{10}$, phénylène, naphtylène, diphénylène ou alcénylène ou $C_2$ à $C_6$,
$R_{17}$ est un radical alkylène en $C_2$ à $C_{10}$, phénylène, naphtylène, méthylènediphénylène ou alkylphénylène en $C_7$ à $C_{15}$, et
$R_{18}$ est un radical alkylène en $C_{22}$ à $C_{10}$ ou alkylène en $C_4$ à $C_{20}$ interrompu par des atomes d'oxygène,
dans le composant B, les trois combinaisons de composés organométalliques constituées de

1. naphténate de cobalt, naphténate de calcium et octoate de zirconium,
2. dessicateur à base de cobalt, de plomb et de manganèse ou
3. naphténate de plomb, naphténate de cobalt et naphténate de manganèse en tant que catalyseurs de durcissement étant exclues.

**2.** Revêtement selon la revendication 1, caractérisé en ce que le constituant (B) est un liant constitué d'une résine d'acrylate fonctionnel et d'un agent de réticulation.

**3.** Revêtement selon la revendication 1, caractérisé en ce que le catalyseur de durcissement (constituant B) est un carboxylate métallique ou un chélate métallique ou un composé de l'organoétain ou une amine.

**4.** Revêtement selon la revendication 3, caractérisé en ce que le catalyseur de durcissement est un carboxylate de l'un des métaux Pb, Mn, Co, Zn, Zr ou Cu ou un chélate de l'un des métaux Al, Ti ou Zr, ou une amine tertiaire.

**5.** Revêtement selon la revendication 1, caractérisé en ce que le constituant C est un composé de formule (I) dans laquelle n vaut 1 ou 2,

$R_1$ et $R_2$, indépendamment l'un de l'autre, sont H ou un radical alkyle en $C_1$ à $C_4$,
$R_3$ et $R_4$, indépendamment l'un de l'autre, sont H, OH ou un radical alkyle en $C_1$ à $C_4$, alcoxy en $C_1$ à $C_4$ ou halogéno,
$R_5$ et $R_6$, indépendamment l'un de l'autre, sont H ou un radical alkyle en $C_1$ à $C_4$,
$R_7$, quand n vaut 1, est un hydrogène ou un radical alkyle en $C_1$ à $C_{18}$, alkyle en $C_1$ à $C_6$, allyle, glycidyle ou benzyle, substitué par des substituants OH, alcoxy en $C_1$ à $C_{18}$, phénoxy, $-COOR_8$, $-CONHR_9$, $-CON(R_9)(R_{10})$ et/ou $-OCOR_{11}$, et quand n vaut 2, un radical alkylène en $C_4$ à $C_{12}$, alcénylène en $C_4$ à $C_6$, xylylène, ou encore alkylène en $C_3$ à $C_{20}$ interrompu par un ou plusieurs atomes d'oxygène et/ou substitué par OH,
$R_8$ est un radical alkyle en $C_1$ à $C_{12}$, alcényle en $C_3$ à $C_{18}$, alkyle en $C_3$ à $C_{20}$ interrompus par des atomes d'oxygène et/ou substitués par des substituants OH ou encore alkyle en $C_1$ à $C_4$ substitué par des substituants $-P(O)(OR_{14})_2$,
$R_9$ et $R_{10}$, indépendamment l'un de l'autre, sont des radicaux alkyle en $C_1$ à $C_8$ ou cyclohexyle, ou bien $R_9$ et $R_{10}$ forment ensemble un radical pentaméthylène ou 3-oxa-pentaméthylène,
$R_{11}$ est un radical alkyle en $C_1$ à $C_8$, alcényle en $C_2$ à $C_5$ ou phényle, et
$R_{14}$ est un radical alkyle en $C_1$ à $C_4$.

**6.** Revêtement selon la revendication 1, caractérisé en ce que le constituant C est un composé de formule (I) dans laquelle n vaut 1 ou 2,

$R_1$ et $R_2$, indépendamment l'un de l'autre, sont H ou $CH_3$,
$R_3$ et $R_4$, indépendamment l'un de l'autre, sont H, $CH_3$ ou Cl,
$R_5$ et $R_6$ sont des hydrogènes,
$R_7$, quand n vaut 1, est un hydrogène ou un radical alkyle en $C_1$ à $C_{12}$ ; alkyle en $C_1$ à $C_4$, glycidyle ou benzyle substitué par des substituants OH, alcoxy en $C_4$ à $C_{18}$, $-COOR_8$, $-CON(R_9)(R_{10})$ et/ou $-OCOR_{11}$, et, quand n vaut 2 un radical aikylène en $C_6$ à $C_{12}$, 2-buténylène 1,4 - xylylène, ou alkylène en $C_3$ à $C_{20}$ interrompu par des

atomes d'oxygène et/ou substitué par des substituants OH,

$R_8$ est un radical alkyle en $C_4$ à $C_{12}$, alcényle en $C_{12}$ à $C_{18}$, alkyle en $C_6$ à $C_{20}$ interrompus par des atomes d'oxygène et/ou substitués par des substituants OH, ou encore alkyle en $C_1$ à $C_4$ substitué par des substituants $-P(O)(OR_{14})_2$,
$R_9$ et $R_{10}$ sont des radicaux alkyle en $C_4$ à $C_8$,
$R_{11}$ est un radical alkyle en $C_1$ à $C_8$ ou alcényle en $C_2$-$C_3$, et
$R_{14}$ est un radical alkyle en $C_1$ à $C_4$.

**7.** Revêtement selon la revendication 1, caractérisé en ce que le constituant C est un composé de formule (I), dans laquelle n vaut 1 ou 2, et $R_7$, quand n vaut 1, est un groupe $-CH_2CH(OH)CH_2O-R_{19}$, dans lequel $R_{19}$ est un radical alkyle en $C_1$ à $C_{12}$, phényle, phényle substitué par des substituants alkyle en $C_1$ à $C_{12}$, alcoxy en $C_1$ à $C_{12}$ ou halogéno, ou encore alcénoyle en $C_3$ à $C_5$, et, quand n vaut 2, $R_7$ est un groupe $-CH_2CH(OH)CH_2O-R_{15}-OCH_2CH(OH)CH_2-$, où $R_{15}$ a les significations données dans la revendication 1.

**8.** Revêtement selon la revendication 1, contenant, pour 100 parties en poids d'extrait sec du liant A, de 0,01 à 20 parties en poids du catalyseur de durcissement B et de 0,1 à 10 parties en poids du stabilisant C.

**9.** Revêtement selon la revendication 1, contenant, outre les constituants A, B et C, et comme constituants supplémentaires, des solvants, pigments, colorants, plastifiants, stabilisants, agents thixotropiques et/ou auxiliaires d'étalement.

**10.** Revêtement selon la revendication 9, qui contient comme constituant D, en plus des constituants A, B et C, un agent photoprotecteur du type des amines à empêchement stérique.

**11.** Utilisation d'un revêtement selon la revendication 1 comme vernis de finition pour automobiles.

**12.** Film de vernis obtenu par durcissement d'une composition de revêtement selon la revendication 11.

**13.** Utilisation de composés de formule (I) selon la revendication 1, comme stabilisants dans des revêtements qui contiennent un liant et au moins un catalyseur de durcissement de la classe des composés organométalliques, des amines, des résines aminées et des phosphines, les trois combinaisons de composés organométalliques constituées de

1. naphténate de cobalt, naphténate de calcium et octoate de zirconium,
2. dessicateur à base de cobalt, de plomb et de manganèse ou
3. naphténate de plomb, naphténate de cobalt et naphténate de manganèse en tant que catalyseurs de durcissement étant exclues.